# EUROPEAN PATENT APPLICATION

(11) **EP 4 632 551 A1**
(43) Date of publication of application: **15.10.2025**
(21) Application number: 25169315.6
(22) Date of filing: 09.04.2025
(51) Int. Cl.: G06F 3/12, G06F 21/33, H04L 9/40, H04L 9/32

(54) **IMAGE PROCESSING APPARATUS LINKED WITH EXTERNAL SYSTEM, EXTERNAL LINKAGE PROGRAM, AND IMAGE PROCESSING SYSTEM**

(30) Priority: 12.04.2024 JP 2024064964
(71) Applicant: Kyocera Document Solutions Inc., Osaka-shi, Osaka 540-8585 (JP)
(72) Inventor: Sato, Masafumi, Osaka 540-8585 (JP); Nakagoshi, Yusuke, Osaka 540-8585 (JP); Hiwatari, Tatsuya, Osaka 540-8585 (JP)
(74) Representative: BRP Renaud & Partner mbB Rechtsanwälte Patentanwälte Steuerberater

(57) **Abstract**

An image processing apparatus (30) includes a first control device (38) including a processor, and configured to act as an external linkage device (38a), when the processor executes an external linkage program (37a). The external linkage device (38a) acquires a token for a user, acquired by an apparatus linkage system (40) linked with the image processing apparatus (30) from an external storage system (50), from the apparatus linkage system (40), downloads print data in the storage system (50) from the storage system (50) using the token, without intermediation of the apparatus linkage system (40), and executes a printing operation according to the print data.

## Description

### BACKGROUND

The present invention relates to an image processing apparatus linked with an external system, an external linkage program, and an image processing system.

An image processing system is known that includes an image processing apparatus that generates scanned data, and an apparatus linkage system linked with the image processing apparatus, the image processing apparatus being configured to upload the scanned data to a storage system outside of the apparatus linkage system, through the apparatus linkage system.

### SUMMARY

The invention proposes further improvement of the foregoing technique.

In an aspect, the invention provides an image processing apparatus including a first control device including a processor, and configured to act as an external linkage device, when the processor executes an external linkage program. The external linkage device acquires a token for a user, acquired by an apparatus linkage system linked with the image processing apparatus from an external storage system, from the apparatus linkage system, downloads print data in the storage system from the storage system using the token, without intermediation of the apparatus linkage system, and executes a printing operation according to the print data.

In another aspect, the invention provides an external linkage program that allows a processor of an image processing apparatus to act as an external linkage device. The external linkage device acquires a token for a user, acquired by an apparatus linkage system linked with the image processing apparatus from an external storage system, from the apparatus linkage system, downloads print data in the storage system from the storage system using the token, without intermediation of the apparatus linkage system, and executes a printing operation according to the print data.

In another aspect, the invention provides an image processing system including the foregoing image processing apparatus, and an apparatus linkage system linked with the image processing apparatus. The apparatus linkage system includes a second control device that acts as an apparatus linkage device. The apparatus linkage device acquires, by causing a user to log in to a storage system outside of the apparatus linkage system, through the apparatus linkage system, a token for the user from the storage system.

In still another aspect, the invention provides an image processing system including the foregoing image processing apparatus configured to generate the scanned data, and an apparatus linkage system linked with the image processing apparatus. The apparatus linkage system includes a second control device that acts as an apparatus linkage device. The apparatus linkage device acquires, by causing a user to log in to a storage system outside of the apparatus linkage system, through the apparatus linkage system, a token for the user from the storage system.

In still another aspect, the invention provides an image processing system including the foregoing image processing apparatus configured to generate the facsimile reception data, and an apparatus linkage system linked with the image processing apparatus. The apparatus linkage system includes a second control device that acts as an apparatus linkage device. The apparatus linkage device acquires, by causing a user to log in to a storage system outside of the apparatus linkage system, through the apparatus linkage system, a token for the user from the storage system.

### BRIEF DESCRIPTION OF THE DRAWINGS

Fig. 1 is a block diagram of an image processing system according to an embodiment of the invention;
Fig. 2 is a block diagram showing a configuration of the user terminal shown in Fig. 1, constituted of a PC;
Fig. 3 is a block diagram showing a configuration of the image processing apparatus shown in Fig. 1, constituted of an MFP;
Fig. 4 is a block diagram showing a configuration of the apparatus linkage system shown in Fig. 1, constituted of a single computer;
Fig. 5 is a table showing an example of the user management information shown in Fig. 4;
Fig. 6 is a table showing an example of the storage management information shown in Fig. 4;
Fig. 7 is a block diagram showing a configuration of the storage system shown in Fig. 1, constituted of a single computer;
Fig. 8 is a table showing an example of the user management information shown in Fig. 7;
Fig. 9 is a sequence chart showing an operation of the image processing system shown in Fig. 1, performed when a user logs in to the apparatus linkage system from the user terminal;
Fig. 10 is a sequence chart showing an operation of the image processing system shown in Fig. 1, performed when the apparatus linkage system links with the storage system;
Fig. 11 is a sequence chart showing the detail of "log-in to the storage system" shown in Fig. 10;
Fig. 12 is a sequence chart showing an operation of the image processing system shown in Fig. 1, performed when the user logs in to the apparatus linkage system from the image processing apparatus;
Fig. 13 is a sequence chart showing an operation of the image processing system shown in Fig. 1, performed when the image processing apparatus displays a folder content list of a folder on the apparatus linkage system;
Fig. 14 is a sequence chart showing an operation of the image processing system shown in Fig. 1, performed when the image processing apparatus displays a folder content list of a folder on the storage system;
Fig. 15 is a sequence chart showing an operation of the image processing system shown in Fig. 1, performed when the image processing apparatus executes a printing operation according to print data downloaded from the apparatus linkage system;
Fig. 16 is a sequence chart showing an operation of the image processing system shown in Fig. 1, performed when the image processing apparatus executes the printing operation according to print data downloaded from the storage system;
Fig. 17 is a sequence chart showing the detail of "printing without direct linkage" shown in Fig. 16;
Fig. 18 is a sequence chart showing the detail of "printing under direct linkage" shown in Fig. 16;
Fig. 19 is a flowchart showing an operation of the image processing apparatus shown in Fig. 3, performed when acquisition of a token from the apparatus linkage system has failed;
Fig. 20 is a schematic drawing showing an example of a screen displayed through the operation shown in Fig. 19;
Fig. 21 is a sequence chart showing an operation of the image processing system shown in Fig. 1, performed to upload scanned data generated by the image processing apparatus to the apparatus linkage system;
Fig. 22 is a sequence chart showing an operation of the image processing system shown in Fig. 1, performed to upload scanned data generated by the image processing apparatus to the storage system;
Fig. 23 is a sequence chart showing the detail of "scanning with specific processing" shown in Fig. 22;
Fig. 24 is a sequence chart showing the detail of "scanning without specific processing" shown in Fig. 22;
Fig. 25 is a sequence chart showing the detail of "scanning under direct linkage" shown in Fig. 22;
Fig. 26 is a flowchart showing an operation of the image processing apparatus shown in Fig. 3, performed when acquisition of a token from the apparatus linkage system has failed;
Fig. 27 is a schematic drawing showing an example of a screen displayed through the operation shown in Fig. 26;
Fig. 28 is a sequence chart showing an operation of the image processing system shown in Fig. 1, performed to upload facsimile reception data generated by the image processing apparatus to the storage system;
Fig. 29 is a sequence chart showing the detail of "facsimile reception without direct linkage" shown in Fig. 28; and
Fig. 30 is a sequence chart showing the detail of "facsimile reception under direct linkage" shown in Fig. 28.

### DETAILED DESCRIPTION

Hereafter, an image processing apparatus and an image processing system according to an embodiment of the invention will be described, with reference to the drawings.

First, a configuration of the image processing system according to the embodiment of the invention will be described.

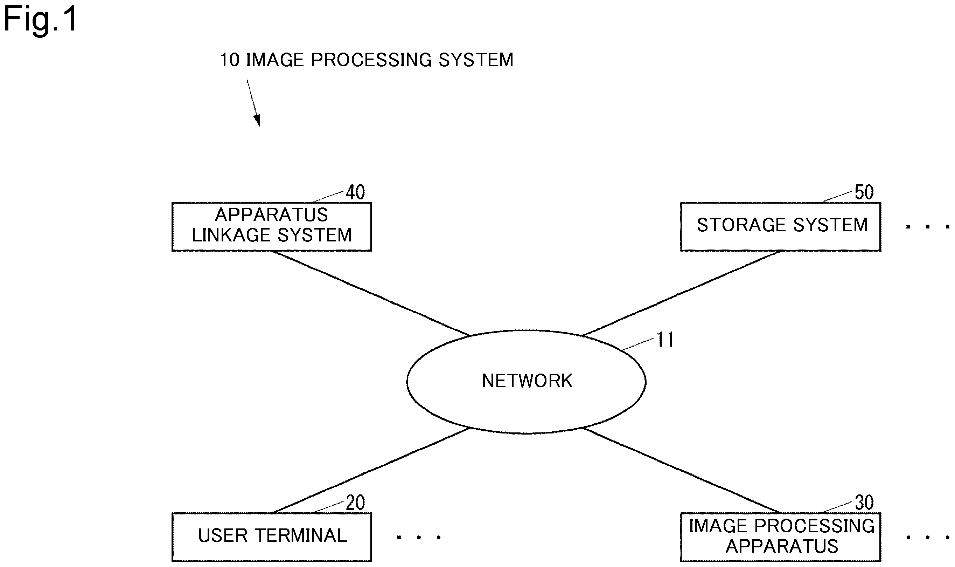

Fig. 1 is a block diagram showing the configuration of the image processing system 10 according to the embodiment.

As shown in Fig. 1, the image processing system 10 includes a user terminal 20 to be utilized by a user. The image processing system 10 may additionally include one or more user terminals configured similarly to the user terminal 20. The user terminal may be constituted of, for example, a personal computer (PC), a smartphone, or a tablet terminal.

The image processing system 10 includes an image processing apparatus 30 to be utilized by the user. The image processing system 10 may additionally include one or more image processing apparatuses configured similarly to the image processing apparatus 30. The image processing apparatus may be constituted of an image forming apparatus such as a single-function printer, a multifunction peripheral (MFP), or an image reading apparatus such as a single-function scanner or an MFP.

The image processing system 10 includes an apparatus linkage system 40 linked with the image processing apparatus. The apparatus linkage system 40 may be constituted of a single computer such as a PC, or a plurality of computers. For example, the apparatus linkage system 40 may be provided on a cloud. The supplier of the apparatus linkage system 40 may be the manufacturer of the image processing apparatus.

The image processing system 10 includes a storage system 50 in which data is stored. The image processing system 10 may additionally include one or more storage systems configured similarly to the storage system 50. The storage system may be constituted of a single computer such as a PC, or a plurality of computers. For example, the storage system 50 may be provided on a cloud. The supplier of the storage system may be different from the manufacturer of the image processing apparatus. The supplier of at least one storage system may be different from the supplier of at least another storage system. As the storage system, for example, "Google (registered trademark) Drive" from Google LLC, "Box (registered trademark)" from Box. Inc., or "Microsoft (registered trademark) One Drive (registered trademark)" or "Microsoft Share Point (registered trademark) Online" from Microsoft Corporation may be adopted.

The user terminal and the apparatus linkage system 40 can communicate with each other, via a network 11 such as a local area network (LAN) or the internet. The image processing apparatus and the apparatus linkage system 40 can communicate with each other via the network 11. The image processing apparatus and the storage system can communicate with each other via the network 11. The apparatus linkage system 40 and the storage system can communicate with each other via the network 11.

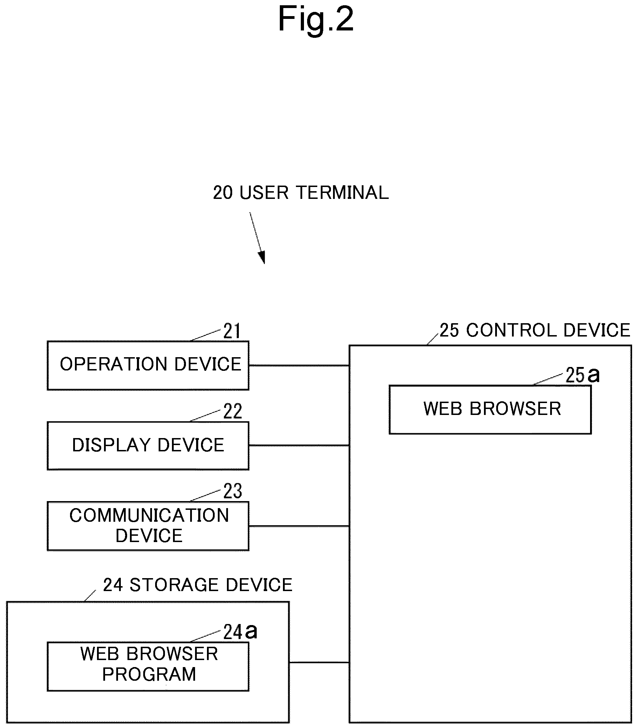

Fig. 2 is a block diagram showing a configuration of the user terminal 20, constituted of a PC.

As shown in Fig. 2, the user terminal 20 includes an operation device 21 including, for example, a keyboard and a mouse for inputting various operations, a display device 22, for example including a liquid crystal display (LCD) for displaying various types of information, a communication device 23 that performs communication with an external device, via a network such as a local area network (LAN) or the internet, or directly through wired or wireless communication, a storage device 24 including a non-volatile memory unit such as a semiconductor memory or a hard disk drive (HDD), for storing various types of information, and a control device 25 that controls the overall operation of the document processing apparatus 20.

The storage device 24 can store therein a web browser program 24a. The web browser program 24a may be, for example, installed in the user terminal 20 during the manufacturing process thereof, additionally installed in the user terminal 20 from an external storage medium such as a universal serial bus (USB) memory, or additionally installed in the user terminal 20 from the network.

The control device 25 includes, for example, a processor such as a central processing unit (CPU), a read-only memory (ROM) containing programs and various types of data, and a random-access memory (RAM) serving as the operating region for the CPU of the control device 25. The CPU of the control device 25 executes the program stored in the storage device 24 or the ROM of the control device 25.

The control device 25 realizes a web browser 25a, by executing the web browser program 24a.

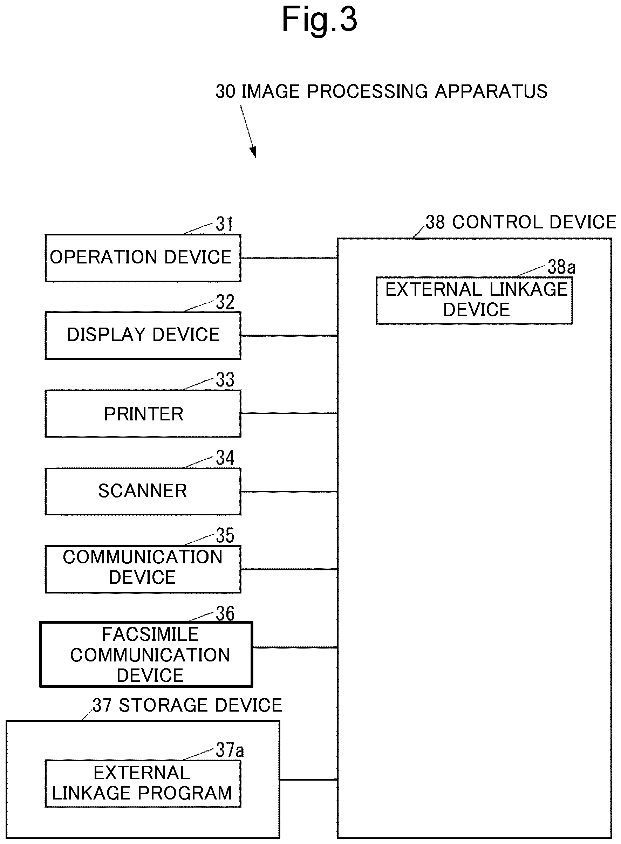

Fig. 3 is a block diagram showing a configuration of the image processing apparatus 30, constituted of an MFP.

As shown in Fig. 3, the image processing apparatus 30 is a computer including an operation device 31 including, for example, a keyboard and a mouse for inputting various operations, a display device 32, for example including an LCD for displaying various types of information, a printer 33 that prints an image on a recording medium such as a paper sheet, a scanner 34 that reads an image from a document, a communication device 35 that performs communication with an external device, via a network such as a LAN or the internet, or directly through wired or wireless communication, a facsimile communication device 36 that performs facsimile communication with a non-illustrated external facsimile machine, via a communication line such as a public telephone network, a storage device 37 including a non-volatile memory unit such as a semiconductor memory or an HDD, for storing various types of information, and a control device 38 that controls the overall operation of the document processing apparatus 20.

The storage device 37 stores therein an external linkage program 37a, for realizing linkage with the external system such as the apparatus linkage system 40 and the storage system. The external linkage program 37a may be, for example, installed in the image processing apparatus 30 during the manufacturing process thereof, additionally installed in the image processing apparatus 30 from an external storage medium such as a USB memory, or additionally installed in the image processing apparatus 30 from the network.

The control device 38 includes, for example, a processor such as a CPU, a ROM containing programs and various types of data, and a RAM serving as the operation region for the CPU of the control device 38. The CPU of the control device 38 executes the program stored in the storage device 37 or the ROM of the control device 38. The control device 38 exemplifies the first control device in the invention.

The control device 38 realizes an external linkage device 38a for establishing linkage with an external system such as the apparatus linkage system 40 and the storage system, by executing the external linkage program 37a.

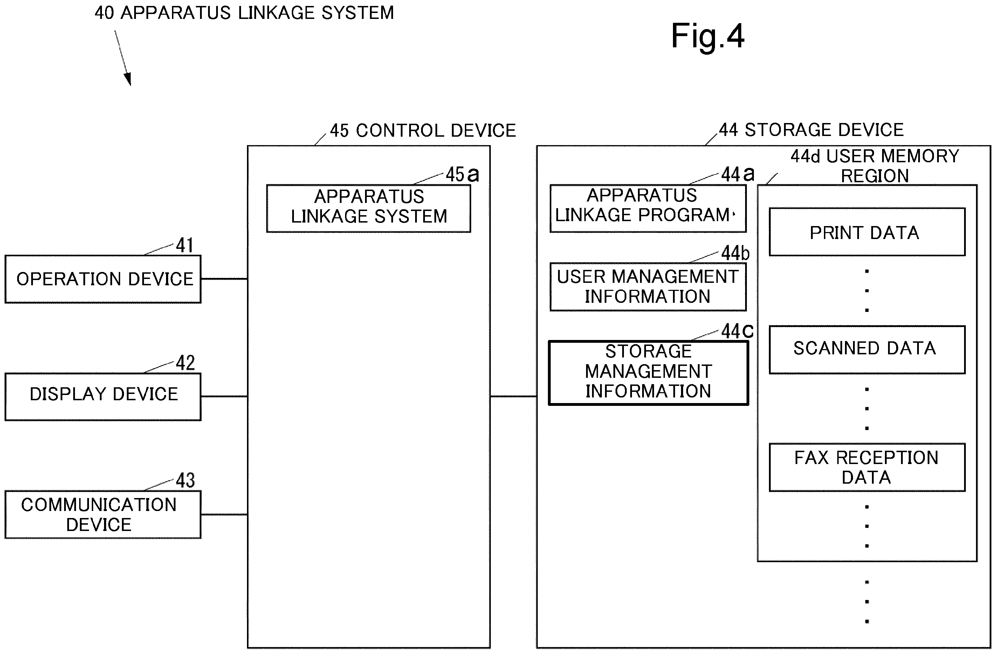

Fig. 4 is a block diagram showing a configuration of the apparatus linkage system 40, constituted of a single computer.

As shown in Fig. 4, the apparatus linkage system 40 includes an operation device 41 including, for example, a keyboard and a mouse for inputting various operations, a display device 42, for example including an LCD for displaying various types of information, a communication device 43 that performs communication with an external device, via a network such as a LAN or the internet, or directly through wired or wireless communication, a storage device 44 including a non-volatile memory unit such as a semiconductor memory or an HDD, for storing various types of information, and a control device 45 that controls the overall operation of the apparatus linkage system 40.

The storage device 44 can store therein an apparatus linkage program 44a, for realizing linkage with the image processing apparatus. The apparatus linkage program 44a may be, for example, installed in the apparatus linkage system 40 during the manufacturing process thereof, additionally installed in the apparatus linkage system 40 from an external storage medium such as a USB memory, or additionally installed in the apparatus linkage system 40 from the network.

The storage device 44 can store therein a user management information 44b for managing the user.

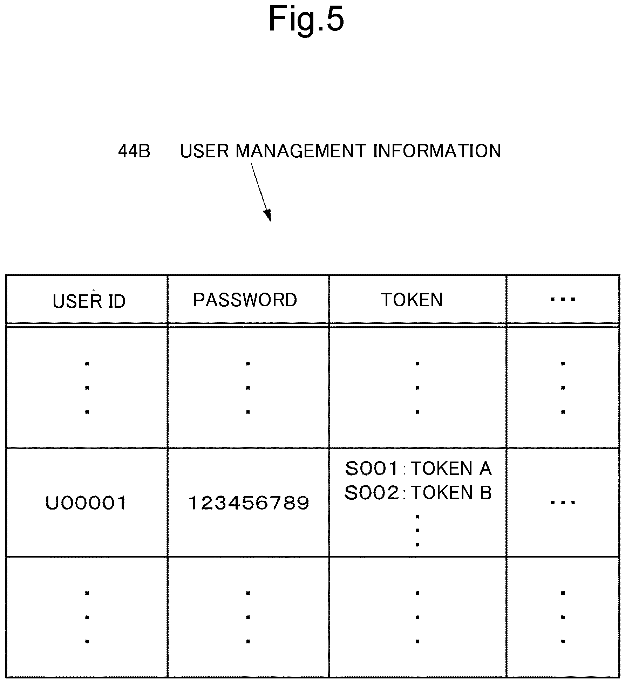

Fig. 5 is a table showing an example of the user management information 44b.

As shown in Fig. 5, the user management information 44b includes the user ID serving as the identification information of the user of the apparatus linkage system 40, the password of the user of the apparatus linkage system 40, and a token for the storage system, serving as a proof that the user has been permitted to log in, in association with each of the users. The user management information 44b includes the token, in association with the storage ID, serving as the identification information of the storage system. For example, the user management information 44b shown in Fig. 5 indicates that the password of the user having the user ID "U00001" is "123456789", and that a token A for the storage system having the storage ID "S001", and a token B for the storage system having the storage ID "S002" are managed at least by the apparatus linkage system 40. In Fig. 5, the user management information 44b only shows a part of the information.

As shown in Fig. 4, the storage device 44 can store therein storage management information 44c, for managing the linkable storage system.

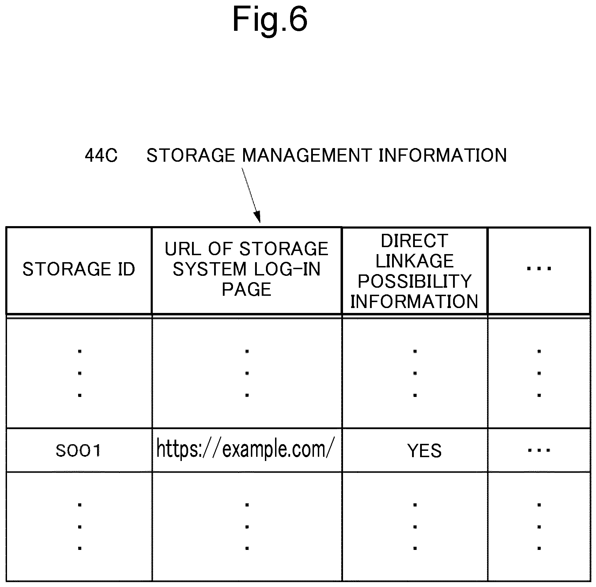

Fig. 6 is a table showing an example of the storage management information 44c.

As shown in Fig. 6, the storage management information 44c includes the storage ID of the storage system, the uniform resource locator (URL) of the webpage for logging in to the storage system (hereinafter, "storage system log-in page"), and direct linkage possibility information indicating whether direct linkage with the image processing apparatus is possible, in association with each of the storage systems. For example, the storage management information 44c shown in Fig. 6 indicates that the URL of the storage system log-in page of the storage system having the storage ID "S001" is "https://example.com/", and that the direct linkage with the image processing apparatus is possible. In Fig. 6, the storage management information 44c only shows a part of the information.

As shown in Fig. 4, the storage device 44 includes a memory region for the user (hereinafter, "user memory region") 44d. The storage device 44 may additionally include one or more user memory regions configured similarly to the user memory region 44d. The storage device 44 includes the user memory region with respect to each of the users. In the user memory region, for example, the print data for the image processing apparatus, the data scanned by the image processing apparatus (hereinafter, "scanned data"), and data received via facsimile by the image processing apparatus (hereinafter, "facsimile reception data") can be stored.

The control device 45 includes, for example, a processor such as a CPU, a ROM containing programs and various types of data, and a RAM serving as the operation region for the CPU of the control device 38. The CPU of the control device 45 executes the program stored in the storage device 44 or the ROM of the control device 45. The control device 45 exemplifies the second control device in the invention.

The control device 45 realizes an apparatus linkage device 45a for establishing the linkage with the image processing apparatus, by executing the apparatus linkage program 44a.

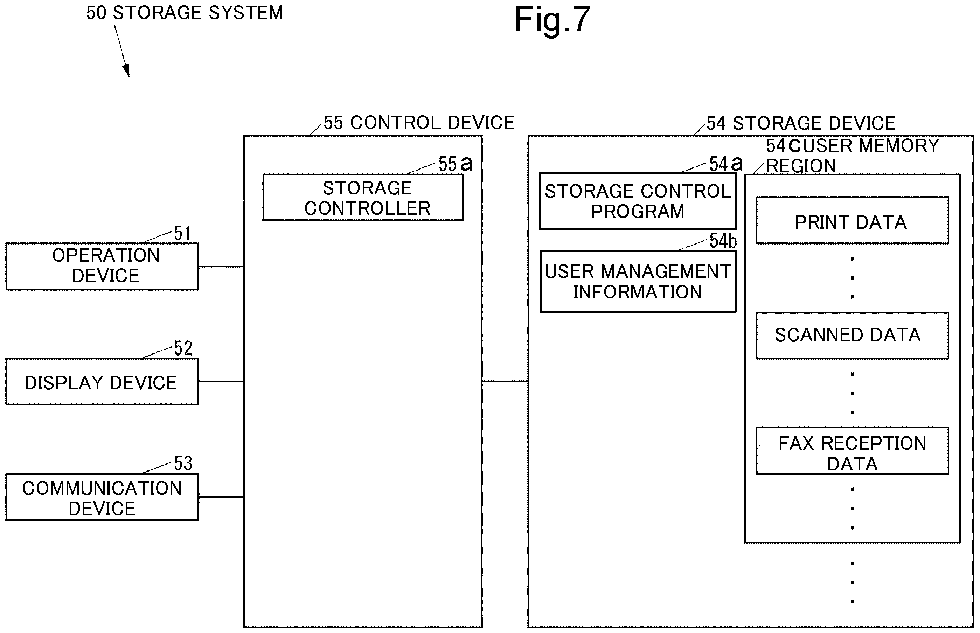

Fig. 7 is a block diagram showing a configuration of the storage system 50, constituted of a single computer.

As shown in Fig. 7, the storage system 50 includes an operation device 51 including, for example, a keyboard and a mouse for inputting various operations, a display device 52, for example including an LCD for displaying various types of information, a communication device 53 that performs communication with an external device, via a network such as a LAN or the internet, or directly through wired or wireless communication, a storage device 54 including a non-volatile memory unit such as a semiconductor memory or an HDD, for storing various types of information, and a control device 55 that controls the overall operation of the storage system 50.

The storage device 54 can store therein a storage control program 54a, for controlling the memory of data. The storage control program 54a may be, for example, installed in the storage system 50 during the manufacturing process thereof, additionally installed in the storage system 50 from an external storage medium such as a USB memory, or additionally installed in the storage system 50 from the network.

The storage device 54 can store therein a user management information 54b for managing the users.

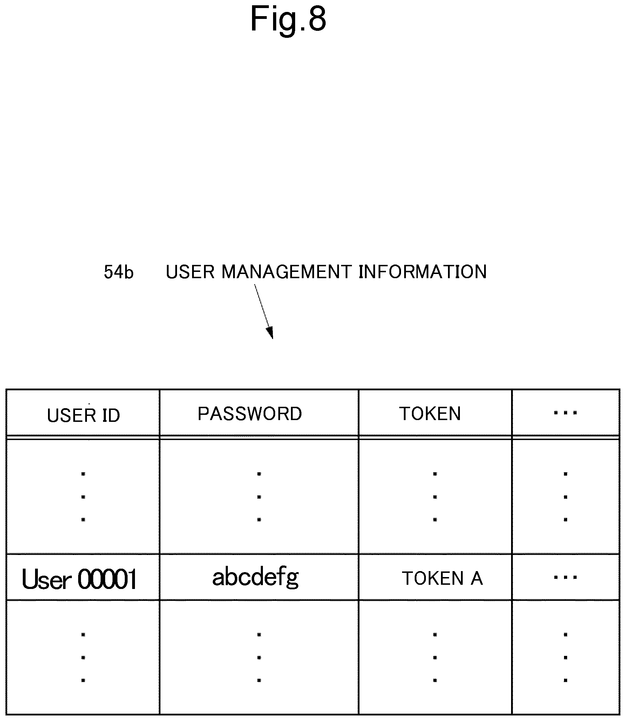

Fig. 8 is a table showing an example of the user management information 54b.

As shown in Fig. 8, the user management information 54b includes the user ID serving as the identification information of the user of the storage system 50, the password of the user of the storage system 50, and a token for the user of the storage system 50, in association with each of the users. For example, the user management information 54b shown in Fig. 5 indicates that the password of the user having the user ID "User00001" is "abcdefg", and that the token for this user is "token A". In Fig. 8, the user management information 54b only shows a part of the information.

As shown in Fig. 7, the storage device 54 includes a user memory region 54c. The storage device 54 may additionally include one or more user memory regions configured similarly to the user memory region 54c. The storage device 54 includes the user memory region with respect to each of the users. In the user memory region, for example, the print data for the image processing apparatus, the scanned data from the image processing apparatus, and the facsimile reception data of the image processing apparatus can be stored.

The control device 55 includes, for example, a processor such as a CPU, a ROM containing programs and various types of data, and a RAM serving as the operation region for the CPU of the control device 55. The CPU of the control device 55 executes the program stored in the storage device 54 or the ROM of the control device 55.

The control device 55 realizes a storage controller 55a that controls the memory of data, by executing the storage control program 54a.

Hereunder, an operation of the image processing system 10 will be described.

First, the operation of the image processing system 10, performed when the user logs in to the apparatus linkage system 40 from the user terminal, will be described.

Although the following description refers to the case where the user is utilizing the user terminal 20, the same operation may be performed, when the user utilizes a user terminal other than the user terminal 20.

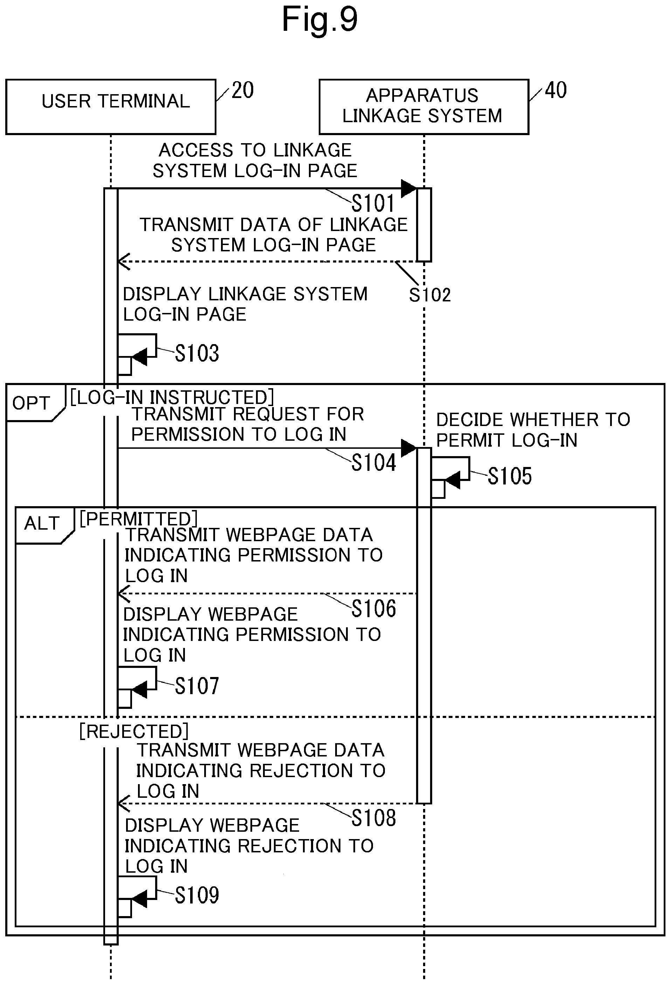

Fig. 9 is a sequence chart showing the operation of the image processing system 10, performed when the user logs in to the apparatus linkage system 40 from the user terminal 20.

The user can instruct a web browser 25a of the user terminal 20, through the operation device 21 thereof, to make access to the webpage for logging in to the apparatus linkage system 40 (hereinafter, "linkage system log-in page").

The web browser 25a makes access to the linkage system log-in page, according to the above instruction (S101).

Upon being accessed as S101, the apparatus linkage device 45a of the apparatus linkage system 40 transmits the data of the linkage system log-in page, to the web browser 25a of the user terminal 20 (S102).

Upon receipt of the data transmitted at S102, the web browser 25a of the user terminal 20 displays the linkage system log-in page, on the display device 22 of the user terminal 20 (S103).

The linkage system log-in page is a webpage that can accept the input of the user ID and the password of the user of the apparatus linkage system 40. Accordingly, after inputting the user ID and the password to the linkage system log-in page, through the operation device 21 of the user terminal 20, the user can instruct the web browser 25a of the user terminal 20 to log in to the apparatus linkage system 40, through the operation device 21 of the user terminal 20.

When the log-in to the apparatus linkage system 40 is instructed, the web browser 25a of the user terminal 20 transmits a request for permission to log in, to the apparatus linkage system 40 (S104). The web browser 25a includes the user ID and the password inputted to the linkage system log-in page, in the request of S104.

Upon receipt of the request of S104, the apparatus linkage device 45a of the apparatus linkage system 40 decides whether the user may be permitted to log in, on the basis of the combination of the user ID and the password, included in the request of S104 (S105). When the combination of the user ID and the password included in the request of S104 is included in the user management information 44b, the apparatus linkage device 45a permits the user, identified with the user ID included in the request of S104, to log in to the apparatus linkage system 40. On the other hand, when the combination of the user ID and the password included in the request of S104 is not included in the user management information 44b, the apparatus linkage device 45a rejects the logging in of the user identified with the user ID included in the request of S104.

Upon deciding at S105 that the user may be permitted to log in, the apparatus linkage device 45a transmits the data of the webpage indicating the permission for the user to log in, to the web browser 25a of the user terminal 20 (S106).

Upon receipt of the data transmitted at S106, the web browser 25a of the user terminal 20 displays the webpage indicating the permission for the user to log in, on the display device 22 of the user terminal 20, according to the received data (S107).

In contrast, upon deciding at S105 that the user should not be permitted to log in, the apparatus linkage device 45a of the apparatus linkage system 40 transmits the data of the webpage indicating that the user is not permitted to log in, to the web browser 25a of the user terminal 20 (S108).

. Upon receipt of the data transmitted at S108, the web browser 25a of the user terminal 20 displays the webpage indicating the rejection of logging in of the user, on the display device 22 of the user terminal 20, according to the received data (S109).

Hereunder, an operation of the image processing system 10, performed when the apparatus linkage system 40 links with the storage system, will be described.

Although the following description refers to the case where the user is utilizing the user terminal 20, the same operation may be performed, when the user utilizes a user terminal other than the user terminal 20.

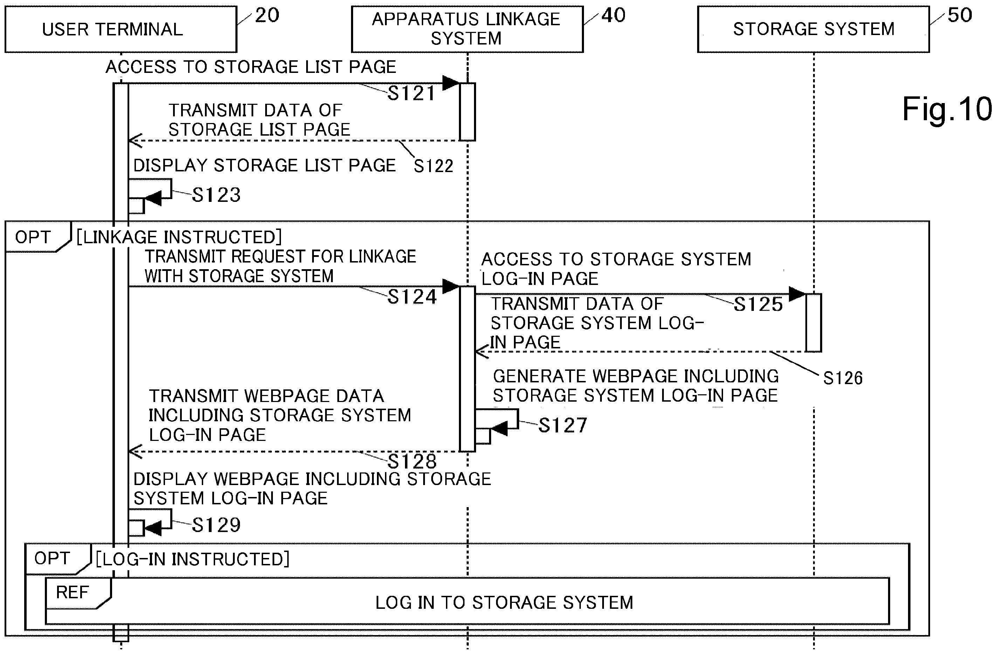

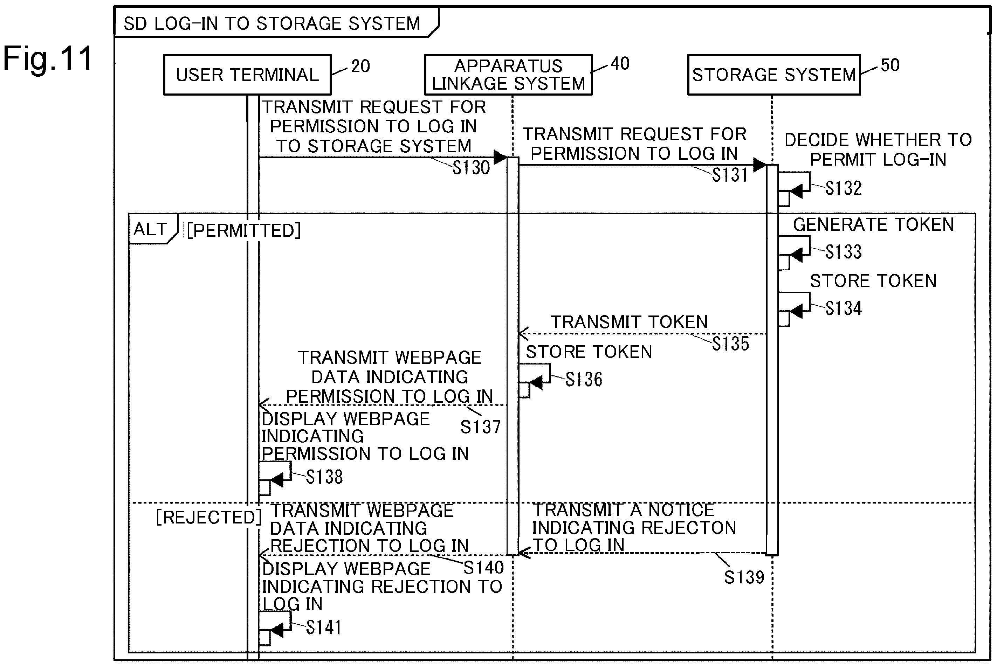

Fig. 10 is a sequence chart showing an operation of the image processing system 10, performed when the apparatus linkage system 40 links with the storage system. Fig. 11 is a sequence chart showing the detail of "log-in to the storage system" shown in Fig. 10.

When the user is in the log-in state in the apparatus linkage system 40, from the web browser 25a of the user terminal 20, the user can instruct the web browser 25a to display a webpage showing a list of the storage systems with which the apparatus linkage system 40 can be linked (hereinafter, "storage list page"), through the operation device 21 of the user terminal 20.

When the display of the storage list page is instructed, the web browser 25a makes access to the storage list page, as shown in Fig. 10 and Fig. 11 (S121).

Upon being accessed as S121, the apparatus linkage device 45a of the apparatus linkage system 40 transmits the data of the storage list page, to the web browser 25a of the user terminal 20 (S122).

Upon receipt of the data transmitted at S122, the web browser 25a of the user terminal 20 displays the storage list page, on the display device 22 of the user terminal 20, according to the received data (S123).

The storage list page is the webpage showing the list of the storage systems included in the storage management information 44c, so that the storage system to be linked with the apparatus linkage system 40 can be selected from the list. Accordingly, the user can select the storage system to be linked with the apparatus linkage system 40 from the storage list page, through the operation device 21 of the user terminal 20, and then instruct the web browser 25a of the user terminal 20 to make linkage with the selected storage system, through the operation device 21 of the user terminal 20.

When the linkage with the storage system is instructed by the user, the web browser 25a of the user terminal 20 transmits a request for linkage with the storage system, the linkage with which has been instructed by the user, to the apparatus linkage system 40 (S124).

Although the following description refers to the case where the storage system the linkage with which has been instructed by the user is the storage system 50, the same operation may be performed, when the storage system the linkage with which has been instructed by the user is a storage system other than the storage system 50.

Upon receipt of the request of S124, the apparatus linkage device 45a of the apparatus linkage system 40 makes access to the storage system log-in page of the storage system 50 (S125). The apparatus linkage device 45a identifies the URL of the storage system log-in page of the storage system 50, on the basis of the storage management information 44c.

Upon being accessed as S125, the storage controller 55a of the storage system 50 transmits the data of the storage system log-in page of the storage system 50, to the apparatus linkage system 40 (S126).

Upon receipt of the data transmitted at S 126, the apparatus linkage device 45a of the apparatus linkage system 40 generates a webpage including the storage system log-in page of the storage system 50, according to the received data (S127).

After S 127,the apparatus linkage device 45a transmits the data of the webpage generated at S127, to the web browser 25a of the user terminal 20 (S128).

Upon receipt of the data transmitted at S128, the web browser 25a of the user terminal 20 displays the webpage including the storage system log-in page of the storage system 50, on the display device 22 of the user terminal 20 (S129).

The storage system log-in page of the storage system 50 is a webpage that accepts the input of the user ID and the password of the user of the storage system 50. Accordingly, the user can input the user ID and the password of the user of the storage system 50 to the webpage displayed as S129, through the operation device 21 of the user terminal 20, and then instruct the web browser 25a of the user terminal 20 to log in to the storage system 50, through the operation device 21 of the user terminal 20.

When the log-in to the storage system 50 is instructed, the web browser 25a of the user terminal 20 transmits a request for permission to log in to the storage system 50, to the apparatus linkage system 40 (S130). In this case, the web browser 25a includes the user ID and the password inputted to the webpage displayed at S129, in the request of S130.

Upon receipt of the request of S130, the apparatus linkage device 45a of the apparatus linkage system 40 transmits the request for permission to log in, to the storage system 50 (S131). In this case, the apparatus linkage device 45a includes the user ID and the password included in the request of S130, in the request of S131.

Upon receipt of the request of S131, the storage controller 55a of the storage system 50 decides whether the user may be permitted to log in, on the basis of the combination of the user ID and the password, included in the request of S131 (S132). When the combination of the user ID and the password included in the request of S131 is included in the user management information 54b, the storage system 50 permits the user, identified with the user ID included in the request of S104, to log in to the storage system 50. On the other hand, when the combination of the user ID and the password included in the request of S131 is not included in the user management information 54b, the storage system 50 rejects the logging in of the user identified with the user ID included in the request of S131.

Upon deciding at S132 that the user may be permitted to log in, the storage controller 55a generates the token for proving that the user identified with the user ID included in the request of S131 has been permitted to log in (S133).

After S133, the storage controller 55a stores the token generated at S133 in the user management information 54b, in association with the user ID included in the request of S131 (S134).

After S134, the storage controller 55a transmits the token generated at S133, to the apparatus linkage system 40 (S135).

Upon receipt of the token transmitted at S135, the apparatus linkage device 45a of the apparatus linkage system 40 stores the token transmitted at S135 in the user management information 44b, as the token for the storage system 50, in association with the user ID included in the request of S131 (S136). Through the operation of S134 and S136, the linkage between the apparatus linkage system 40 and the storage system 50 is established.

After S136, the apparatus linkage device 45a transmits the data of the webpage indicating the permission for the user to log in, to the web browser 25a of the user terminal 20 (S137).

Upon receipt of the data transmitted at S137, the web browser 25a of the user terminal 20 displays the webpage indicating the permission for the user to log in, on the display device 22 of the user terminal 20, according to the received data (S138).

In contrast, upon deciding at S132 that the user should not be permitted to log in, the storage controller 55a transmits a notice to the effect that the user is not permitted to log in, to the apparatus linkage system 40 (S139).

Upon receipt of the notice transmitted at S139, the apparatus linkage device 45a of the apparatus linkage system 40 transmits the data of the webpage indicating the rejection of logging in of the user, to the web browser 25a of the user terminal 20 (S140).

Upon receipt of the data transmitted at S140, the web browser 25a of the user terminal 20 displays the webpage indicating the rejection of logging in of the user, on the display device 22 of the user terminal 20, according to the received data (S141).

Hereunder, an operation of the image processing system 10, performed when the user logs in to the apparatus linkage system 40 from the image processing apparatus, will be described.

Although the following description refers to the case where the user is utilizing the image processing apparatus 30, the same operation may be performed, when the user utilizes an image processing apparatus other than the image processing apparatus 30.

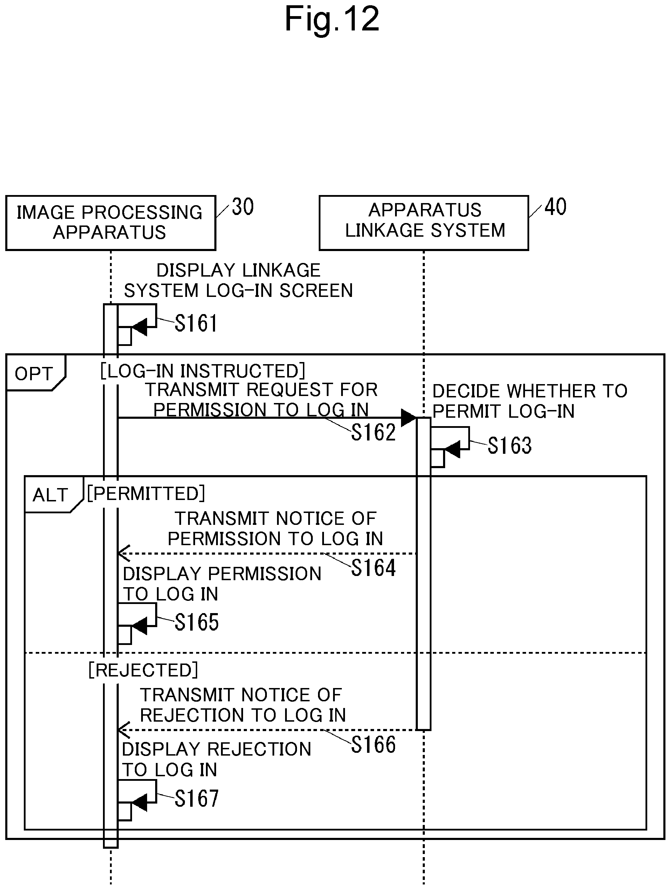

Fig. 12 is a sequence chart showing an operation of the image processing system 10, performed when the user logs in to the apparatus linkage system 40 from the image processing apparatus 30.

The user can instruct the image processing apparatus 30 to log in to the apparatus linkage system 40, through the operation device 31 of the image processing apparatus 30.

When the log-in to the apparatus linkage system 40 is instructed, the external linkage device 38a of the image processing apparatus 30 displays a screen for logging in to the apparatus linkage system 40 (hereinafter, "linkage system log-in screen"), on the display device 32 (S161).

The linkage system log-in screen is a screen that accepts the input of the user ID and the password of the user of the apparatus linkage system 40. Accordingly, the user can input the user ID and the password of the user of the apparatus linkage system 40 to the linkage system log-in screen, through the operation device 31 of the image processing apparatus 30, and then instruct the image processing apparatus 30 to log in to the apparatus linkage system 40, through the operation device 31 of the image processing apparatus 30.

When the log-in to the apparatus linkage system 40 is instructed, the transmits a request for permission to log in, to the apparatus linkage system 40 (S162). The external linkage device 38a includes the user ID and the password inputted to the linkage system log-in screen, in the request of S162.

Upon receipt of the request of S162, the apparatus linkage device 45a of the apparatus linkage system 40 decides whether the user may be permitted to log in, on the basis of the combination of the user ID and the password, included in the request of S162 (S163). When the combination of the user ID and the password included in the request of S162 is included in the user management information 44b, the apparatus linkage device 45a permits the user, identified with the user ID included in the request of S162, to log in to the apparatus linkage system 40. On the other hand, when the combination of the user ID and the password included in the request of S162 is not included in the user management information 44b, the apparatus linkage device 45a rejects the logging in of the user identified with the user ID included in the request of S162.

Upon deciding at S163 that the user may be permitted to log in, the apparatus linkage device 45a transmits the notice to the effect that the user has been permitted to log in, to the image processing apparatus 30 (S164).

Upon receipt of the notice transmitted at S164, the external linkage device 38a of the image processing apparatus 30 displays the notice indicating the permission for the user to log in, on the display device 32 of the image processing apparatus 30 (S165).

In contrast, upon deciding at S163 that the user should not be permitted to log in, the apparatus linkage device 45a of the apparatus linkage system 40 transmits the notice to the effect that the user is not permitted to log in, to the image processing apparatus 30 (S166).

Upon receipt of the notice transmitted at S166, the external linkage device 38a of the image processing apparatus 30 displays the notice indicating the rejection of logging in of the user, on the display device 32 of the image processing apparatus 30 (S167).

Hereunder, an operation of the image processing system 10, performed when the image processing apparatus displays a list of folders and files in the folder on the apparatus linkage system 40 (hereinafter, "folder content list"), will be described.

Although the following description refers to the case where the user is utilizing the image processing apparatus 30, the same operation may be performed, when the user utilizes an image processing apparatus other than the image processing apparatus 30.

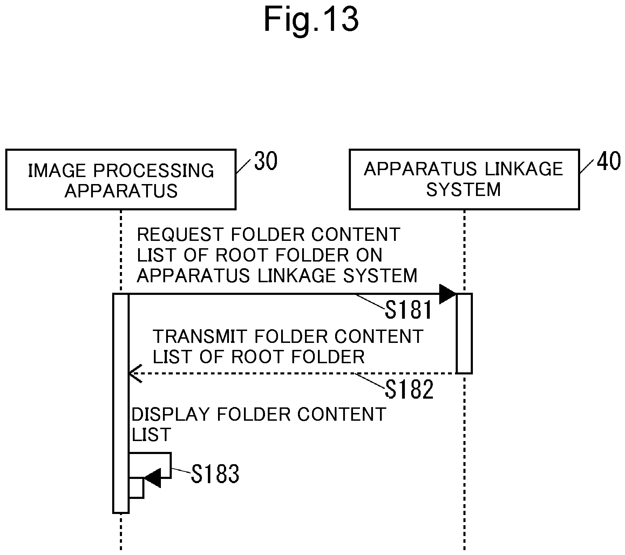

Fig. 13 is a sequence chart showing an operation of the image processing system 10, performed when the image processing apparatus 30 displays the folder content list of the folder on the apparatus linkage system 40.

When the user is in the log-in state in the apparatus linkage system 40, from the image processing apparatus 30, the user can instruct the image processing apparatus 30 to display the folder content list of a root folder on the apparatus linkage system 40, through the operation device 31 of the image processing apparatus 30.

When the display of the folder content list of the root folder on the apparatus linkage system 40 is instructed, the external linkage device 38a of the image processing apparatus 30 requests the apparatus linkage system 40 to provide the folder content list of the root folder on the apparatus linkage system 40, as shown in Fig. 13 (S181).

Upon receipt of the request of S181, the apparatus linkage device 45a of the apparatus linkage system 40 transmits the folder content list of the root folder in the user memory region in the apparatus linkage system 40, for the user who already logged in to the apparatus linkage system 40 from the image processing apparatus 30, in other words the folder content list of the root folder in the user memory region associated in the apparatus linkage system 40 with the user ID of the user who already logged in to the apparatus linkage system 40 from the image processing apparatus 30, to the image processing apparatus 30 (S182).

Upon receipt of the folder content list transmitted at S182, the external linkage device 38a of the image processing apparatus 30 displays the received folder content list, on the display device 32 of the image processing apparatus 30 (S183).

The user can select, while the folder content list is displayed on the display device 32 of the image processing apparatus 30, the folders and files included in the folder content list displayed on the display device 32, through the operation device 31 of the image processing apparatus 30.

After selecting the folder included in the folder content list displayed on the display device 32, while the folder content list is displayed on the display device 32 of the image processing apparatus 30, the user can instruct the image processing apparatus 30 to display the folder content list of the selected folder, through the operation device 31 of the image processing apparatus 30. When the user instructs the image processing apparatus 30 to display the folder content list of the folder selected by the user, the image processing system 10 executes the operations similar to those specified in S181 to S183, with respect to the folder content list of the folder selected by the user, instead of the folder content list of the root folder in the user memory region in the apparatus linkage system 40, for the user who already logged in to the apparatus linkage system 40 from the image processing apparatus 30.

The user can also instruct, while the folder content list of one of the folders, subordinate to the root folder in the user memory region in the apparatus linkage system 40, for the user who already logged in to the apparatus linkage system 40 from the image processing apparatus 30, is displayed on the display device 32 of the image processing apparatus 30, the image processing apparatus 30 to display the folder content list of the folder superordinate to the folder corresponding to the folder content list displayed on the display device 32, through the operation device 31 of the image processing apparatus 30. When the user instructs the image processing apparatus 30 to display the folder content list of the folder superordinate to the folder corresponding to the folder content list displayed on the display device 32, the image processing system 10 executes the operations similar to those specified in S181 to S183, with respect to the folder content list of the folder superordinate to the folder corresponding to the folder content list displayed on the display device 32, instead of the folder content list of the root folder in the user memory region in the apparatus linkage system 40, for the user who already logged in to the apparatus linkage system 40 from the image processing apparatus 30.

Thus, the user can have the folder content list of all the folders, in the user memory region for the user him/herself of the apparatus linkage system 40, displayed on the display device 32, by repeating the mentioned operation.

Hereunder, an operation of the image processing system 10, performed when the image processing apparatus displays the folder content list of the folder on the storage system, will be described.

Although the following description refers to the case where the user is utilizing the image processing apparatus 30, the same operation may be performed, when the user utilizes an image processing apparatus other than the image processing apparatus 30. In addition, although the following description refers to the case where the storage system, from which the folder content list is displayed by the image processing apparatus, is the storage system 50, the same operation may be performed, when the storage system from which the folder content list is displayed by the image processing apparatus is a storage system other than the storage system 50.

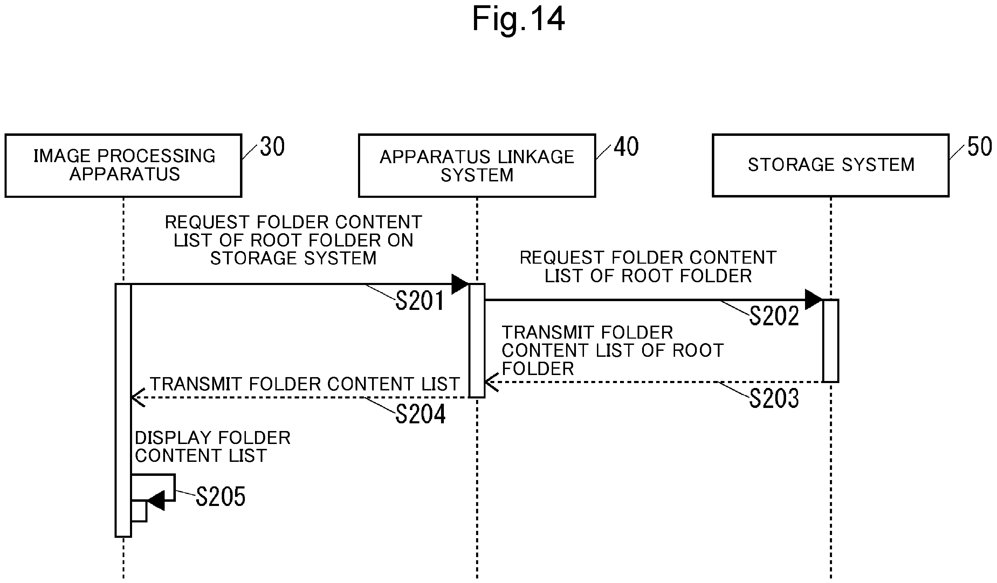

Fig. 14 is a sequence chart showing an operation of the image processing system 10, performed when the image processing apparatus 30 displays the folder content list of the folder on the storage system 50.

When the user is in the log-in state in the apparatus linkage system 40, from the image processing apparatus 30, and the linkage between the apparatus linkage system 40 and the storage system 50 is established, the user can instruct the image processing apparatus 30 to display the folder content list of the root folder on the storage system 50, through the operation device 31 of the image processing apparatus 30.

When the display of the folder content list of the root folder on the storage system 50 is instructed, the external linkage device 38a of the image processing apparatus 30 requests the apparatus linkage system 40 to provide the folder content list of the root folder on the storage system 50, as shown in Fig. 14 (S201).

Upon receipt of the request of S201, the apparatus linkage device 45a of the apparatus linkage system 40 requests the storage system 50 to provide the folder content list of the root folder in the user memory region in the storage system 50, for the user who already logged in to the apparatus linkage system 40 from the image processing apparatus 30 (S202). In this case, the apparatus linkage device 45a includes the token for the storage system 50, associated in the user management information 44b with the user ID of the user who already logged in to the apparatus linkage system 40, from the image processing apparatus 30, in the request of S202.

Upon receipt of the request of S202, the storage controller 55a of the storage system 50 transmits the folder content list of the root folder in the user memory region in the storage system 50, for the user who already logged in to the apparatus linkage system 40 from the image processing apparatus 30, in other words the folder content list of the root folder in the user memory region, associated in the storage system 50 with the user ID associated in the user management information 54b with the token included in the request of S202, to the apparatus linkage system 40 (S203).

Upon receipt of the folder content list transmitted at S203, the apparatus linkage device 45a of the apparatus linkage system 40 transmits the received folder content list, to the image processing apparatus 30 (S204).

Upon receipt of the folder content list transmitted at S204, the external linkage device 38a of the image processing apparatus 30 displays the received folder content list on the display device 32 of the image processing apparatus 30 (S205).

The user can select, while the folder content list is displayed on the display device 32 of the image processing apparatus 30, the folders and files included in the folder content list displayed on the display device 32, through the operation device 31 of the image processing apparatus 30.

After selecting the folder included in the folder content list displayed on the display device 32, while the folder content list is displayed on the display device 32 of the image processing apparatus 30, the user can instruct the image processing apparatus 30 to display the folder content list of the selected folder, through the operation device 31 of the image processing apparatus 30. When the user instructs the image processing apparatus 30 to display the folder content list of the folder selected by the user, the image processing system 10 executes the operations similar to those specified in S201 to S205, with respect to the folder content list of the folder selected by the user, instead of the folder content list of the root folder in the user memory region in the storage system 50, for the user who already logged in to the apparatus linkage system 40 from the image processing apparatus 30.

The user can also instruct, while the folder content list of one of the folders, subordinate to the root folder in the user memory region in the storage system 50, for the user who already logged in to the apparatus linkage system 40 from the image processing apparatus 30, is displayed on the display device 32 of the image processing apparatus 30, the image processing apparatus 30 to display the folder content list of the folder superordinate to the folder corresponding to the folder content list displayed on the display device 32, through the operation device 31 of the image processing apparatus 30. When the user instructs the image processing apparatus 30 to display the folder content list of the folder superordinate to the folder corresponding to the folder content list displayed on the display device 32, the image processing system 10 executes the operations similar to those specified in S201 to S205, with respect to the folder content list of the folder superordinate to the folder corresponding to the folder content list displayed on the display device 32, instead of the folder content list of the root folder in the user memory region in the storage system 50, for the user who already logged in to the apparatus linkage system 40 from the image processing apparatus 30.

Thus, the user can have the folder content list of all the folders, in the user memory region for the user him/herself of the storage system 50, displayed on the display device 32, by repeating the mentioned operation.

Hereunder, an operation of the image processing system 10, performed when the image processing apparatus executes a printing operation, according to the print data downloaded from the apparatus linkage system 40, will be described.

Although the following description refers to the case where the user is utilizing the image processing apparatus 30, the same operation may be performed, when the user utilizes an image processing apparatus other than the image processing apparatus 30

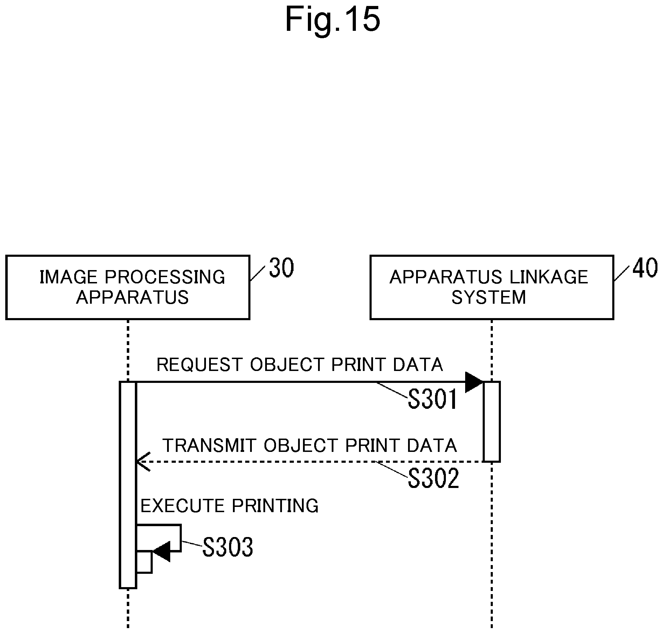

Fig. 15 is a sequence chart showing the operation of the image processing system 10, performed when the image processing apparatus 30 executes the printing operation, according to the print data downloaded from the apparatus linkage system 40.

When the user is in the log-in state in the apparatus linkage system 40, from the image processing apparatus 30, the user can select the file of the print data stored in the apparatus linkage system 40, as described above. After selecting the print data stored in the apparatus linkage system 40, the user can instruct the image processing apparatus 30 to execute the printing operation based on the print data (hereinafter "object print data", with reference to the operation specified in Fig. 15), through the operation device 31 of the image processing apparatus 30.

When the execution of the printing operation based on the object print data is instructed, the external linkage device 38a of the image processing apparatus 30 requests the apparatus linkage system 40 to provide the object print data, as shown in Fig. 15 (S301).

Upon receipt of the request of S301, the apparatus linkage device 45a of the apparatus linkage system 40 transmits the object print data, requested at S301, to the image processing apparatus 30 (S302).

Upon receipt of the object print data transmitted at S302, the external linkage device 38a of the image processing apparatus 30 executes the printing operation using the printer 33, on the basis of the object print data received (S303).

Hereunder, an operation of the image processing system 10, performed when the image processing apparatus executes the printing operation, according to the print data downloaded from the storage system, will be described.

Although the following description refers to the case where the user is utilizing the image processing apparatus 30, the same operation may be performed, when the user utilizes an image processing apparatus other than the image processing apparatus 30. **In** addition, although the following description refers to the case where the storage system in which the print data is stored is the storage system 50, the same operation may be performed, when the storage system in which the print data is stored is a storage system other than the storage system 50.

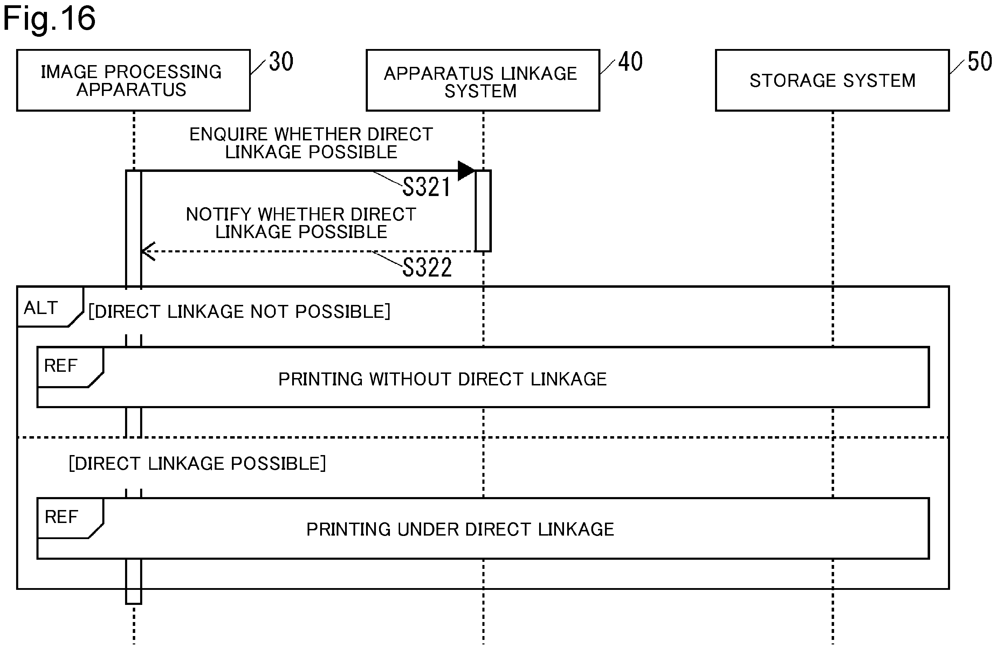

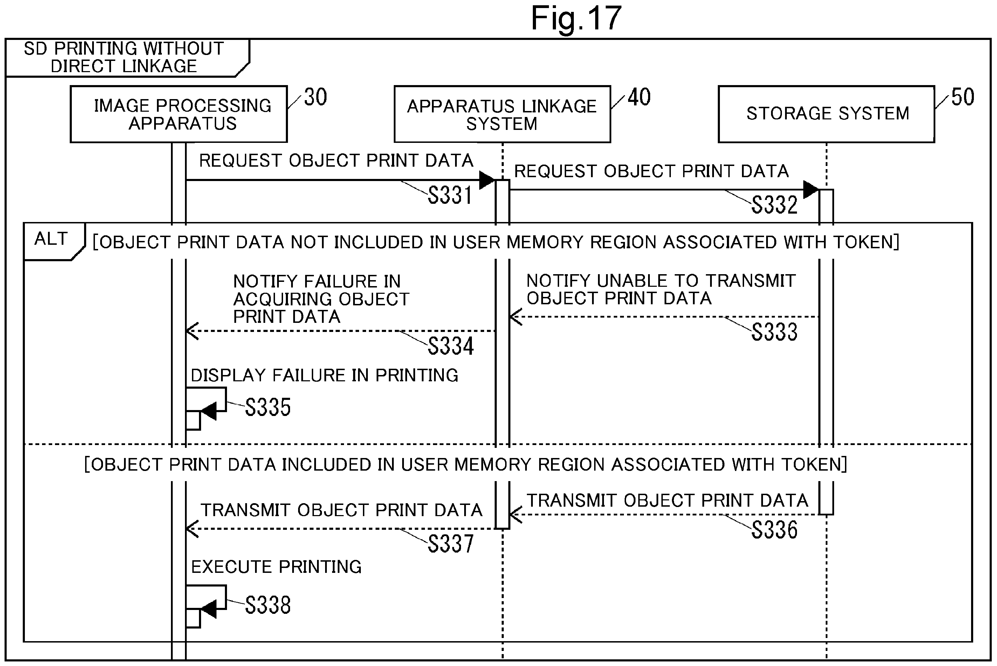

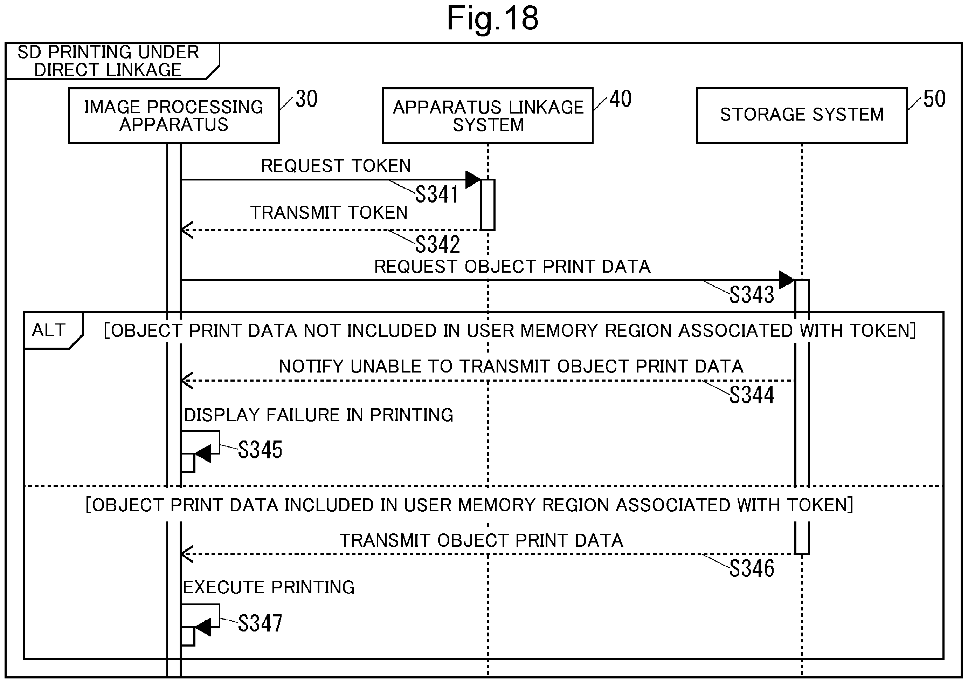

Fig. 16 is a sequence chart showing the operation of the image processing system 10, performed when the image processing apparatus 30 executes the printing operation, according to the print data downloaded from the storage system 50. Fig. 17 is a sequence chart showing the detail of "printing without direct linkage" shown in Fig. 16. Fig. 18 is a sequence chart showing the detail of "printing under direct linkage" shown in Fig. 16.

When the user is in the log-in state in the apparatus linkage system 40, from the image processing apparatus 30, the user can select the file of the print data stored in the storage system 50, as described above. After selecting the print data stored in the storage system 50, the user can instruct the image processing apparatus 30 to execute the printing operation based on the print data (hereinafter "object print data", with reference to the operation specified in Fig. 16 to Fig. 18), through the operation device 31 of the image processing apparatus 30.

When the execution of the printing operation based on the object print data is instructed, the external linkage device 38a of the image processing apparatus 30 enquires the apparatus linkage system 40 whether the storage system 50 can be directly linked with the image processing apparatus, as shown in Fig. 16 (S321).

Upon receipt of the enquiry of S321, the apparatus linkage device 45a of the apparatus linkage system 40 notifies the image processing apparatus 30 whether the storage system 50 can be directly linked with the image processing apparatus, on the basis of the storage management information 44c (S322).

Upon receipt of the notice of S322 that the storage system 50 is unable to be directly linked with the image processing apparatus, the external linkage device 38a of the image processing apparatus 30 requests the apparatus linkage system 40 to provide the object print data (S331).

Upon receipt of the request of S331, the apparatus linkage device 45a of the apparatus linkage system 40 requests the storage system 50 to provide the object print data (S332). The apparatus linkage device 45a includes the token for the storage system 50, associated in the user management information 44b with the user ID of the user who already logged in to the image processing apparatus 30, in the request of S332.

Upon receipt of the request of S332, the storage controller 55a of the storage system 50 notifies the apparatus linkage device 45a to the effect that the object print data requested as S332 is unable to be transmitted, when the object print data requested as S332 is not included in the user memory region in the storage system 50, for the user who already logged in to the apparatus linkage system 40 from the image processing apparatus 30, in other words in the user memory region, associated in the storage system 50 with the user ID associated with the token included in the request of S332 in the user management information 54b (S333).

Upon receipt of the notice of S333, the apparatus linkage device 45a of the apparatus linkage system 40 notifies the image processing apparatus 30 that the acquisition of the object print data from the storage system 50 has failed (S334).

Upon receipt of the notice of S334, the external linkage device 38a of the image processing apparatus 30 displays a message indicating the failure in execution of the printing operation, due to the failure in acquiring the object print data from the storage system 50, on the display device 32 of the image processing apparatus 30 (S335).

Upon receipt of the request of S332, the storage controller 55a of the storage system 50 transmits the object print data requested as S332 to the apparatus linkage device 45a, when the object print data requested as S332 is included in the user memory region in the storage system 50, for the user who already logged in to the apparatus linkage system 40 from the image processing apparatus 30, in other words in the user memory region, associated in the storage system 50 with the user ID associated with the token included in the request of S332 in the user management information 54b (S336).

Upon receipt of the object print data transmitted at S336, the apparatus linkage device 45a of the apparatus linkage system 40 transmits the object print data received, to the image processing apparatus 30 (S337).

Upon receipt of the object print data transmitted at S337, the external linkage device 38a of the image processing apparatus 30 executes the printing operation using the printer 33, on the basis of the object print data received (S338).

Upon receipt of the notice of S322 that the storage system 50 can be directly linked with the image processing apparatus, the external linkage device 38a of the image processing apparatus 30 requests the apparatus linkage system 40 to provide the token for the storage system 50 (S341).

Upon receipt of the request of S341, the apparatus linkage device 45a of the apparatus linkage system 40 transmits the token for the storage system 50, associated with the user ID of the user who already logged in from the image processing apparatus 30, in the user management information 44b, to the image processing apparatus 30 (S342).

Upon receipt of the token transmitted at S342, the external linkage device 38a of the image processing apparatus 30 requests the storage system 50 to provide the object print data (S343). The external linkage device 38a includes the token transmitted at S342, in the request of S343.

Upon receipt of the request of S343, the storage controller 55a of the storage system 50 notifies the image processing apparatus 30 to the effect that the object print data requested as S343 is unable to be transmitted, when the object print data requested as S343 is not included in the user memory region in the storage system 50, for the user who already logged in to the apparatus linkage system 40 from the image processing apparatus 30, in other words in the user memory region, associated in the storage system 50 with the user ID associated with the token included in the request of S343 in the user management information 54b (S344).

Upon receipt of the notice of S344, the external linkage device 38a of the image processing apparatus 30 displays the message indicating the failure in execution of the printing operation, due to the failure in acquiring the object print data from the storage system 50, on the display device 32 of the image processing apparatus 30 (S345).

Upon receipt of the request of S343, the storage controller 55a of the storage system 50 transmits the object print data requested as S343 to the image processing apparatus 30, when the object print data requested as S343 is included in the user memory region in the storage system 50, for the user who already logged in to the apparatus linkage system 40 from the image processing apparatus 30, in other words in the user memory region, associated in the storage system 50 with the user ID associated with the token included in the request of S343, in the user management information 54b (S346).

Upon receipt of the object print data transmitted at S346, the external linkage device 38a of the image processing apparatus 30 executes the printing operation using the printer 33, on the basis of the object print data received (S347).

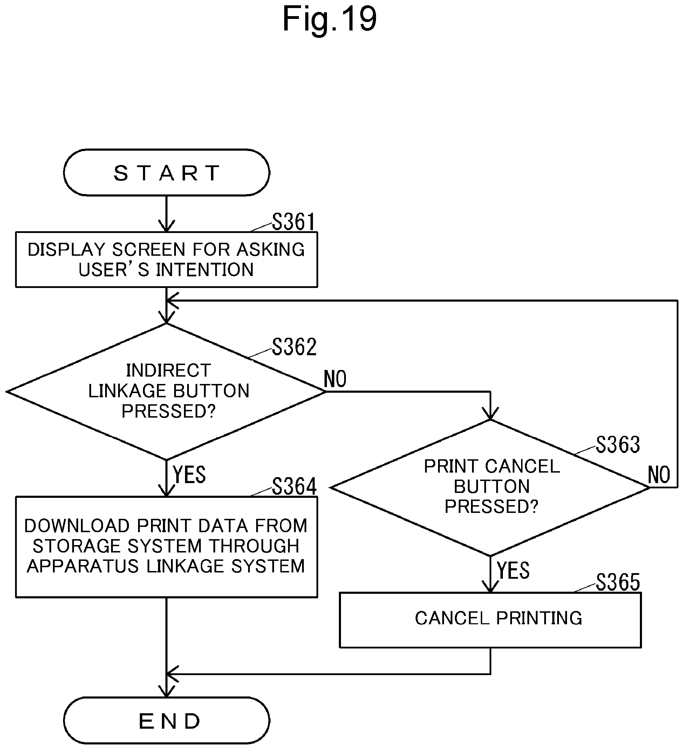

The foregoing description is based on the assumption that the image processing apparatus 30 successfully acquired the token transmitted from the apparatus linkage system 40 at S342. In the case where the acquisition of the token from the apparatus linkage system 40 has failed, the external linkage device 38a of the image processing apparatus 30 may either suspend the printing operation based on the print data stored in the storage system, or perform an operation specified in Fig. 19. Here, the external linkage device 38a of the image processing apparatus 30 may decide that the acquisition of the token from the apparatus linkage system 40 has failed, when, for example, the token has not been received from the apparatus linkage system 40, within a predetermined time after the request of S341.

Fig. 19 is a flowchart showing the operation of the image processing apparatus 30, performed when the acquisition of the token from the apparatus linkage system 40 has failed.

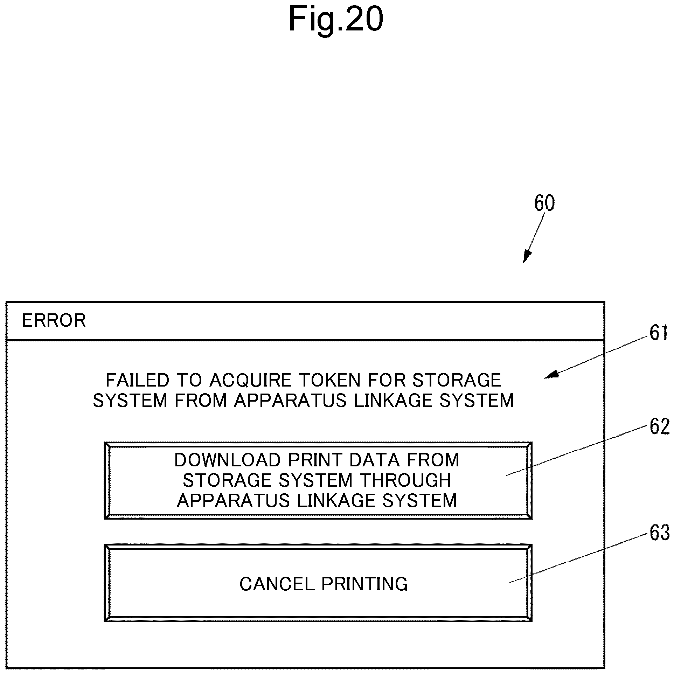

As shown in Fig. 19, the external linkage device 38a of the image processing apparatus 30 displays a screen 60 (see Fig. 20) asking the user's intention, on the display device 32 of the image processing apparatus 30 (S361).

Fig. 20 is a schematic drawing showing an example of the screen 60, displayed through the operation shown in Fig. 19.

The screen 60 shown in Fig. 20 includes a message 61 indicating the failure in acquiring the token for the storage system 50 from the apparatus linkage system 40, an indirect linkage button 62 to be pressed by the user when the user wishes to download the print data from the storage system 50 through the apparatus linkage system 40, and a print cancel button 63 for cancelling the printing operation based on the print data stored in the storage system 50.

Referring again to Fig. 19, after S361 the external linkage device 38a of the image processing apparatus 30 decides whether the indirect linkage button 62 has been pressed (S362).

Upon deciding at S362 that the indirect linkage button 62 has not been pressed, the external linkage device 38a decides whether the print cancel button 63 has been pressed (S363).

Upon deciding at S362 that the print cancel button 63 has not been pressed, the external linkage device 38a executes the operation of S362.

Upon deciding at S362 that the indirect linkage button 62 has been pressed, the external linkage device 38a downloads the print data from the storage system 50, through the apparatus linkage system 40 (S364). More specifically, the external linkage device 38a executes the operation of S331 (see Fig. 17). Accordingly, the image processing system 10 executes the operations of S331 to S338 (see Fig. 17).

Upon deciding at S363 that the print cancel button 63 has been pressed, the external linkage device 38a suspends the printing operation based on the print data stored in the storage system (S365).

After S364 or S365, the external linkage device 38a finishes the operation specified in Fig. 19.

Hereunder, an operation of the image processing system 10, performed to upload the scanned data generated by the image processing apparatus, to the apparatus linkage system 40, will be described.

Although the following description refers to the case where the user is utilizing the image processing apparatus 30, the same operation may be performed, when the user utilizes an image processing apparatus other than the image processing apparatus 30.

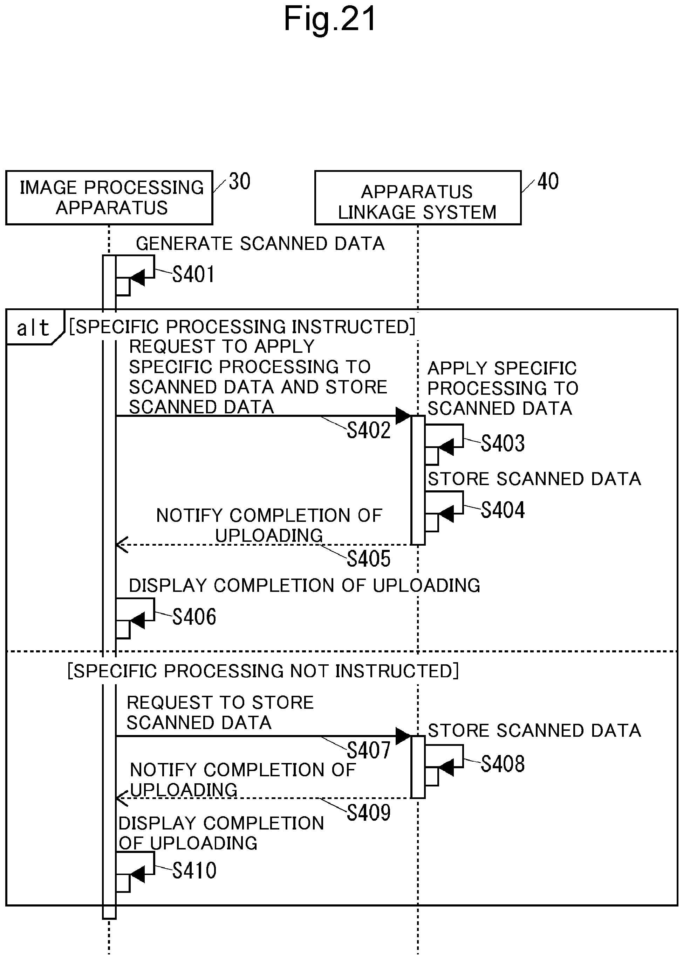

Fig. 21 is a sequence chart showing the operation of the image processing system 10, performed to upload the scanned data generated by the image processing apparatus 30, to the apparatus linkage system 40.

When the user is in the log-in state in the apparatus linkage system 40, from the image processing apparatus 30, the user can select the folder stored in the apparatus linkage system 40, as described above. After selecting the folder stored in the apparatus linkage system 40, the user can instruct the image processing apparatus 30 to execute a scanning operation including uploading the scanned data to the selected folder (hereinafter "object folder", with reference to the operation specified in Fig. 21), through the operation device 31 of the image processing apparatus 30. The user can also instruct the image processing apparatus 30 to perform a specific processing on the scanned data, before uploading the scanned data, through the operation device 31 of the image processing apparatus 30. The specific processing can be exemplified by applying a watermark.

When the scanning operation, including uploading the scanned data to the object folder, is instructed, the external linkage device 38a of the image processing apparatus 30 generates the scanned data, by reading the image of a document with the scanner 34, as shown in Fig. 21 (S401).

After S401, the external linkage device 38a requests, in the case where the user has instructed to apply the specific processing to the scanned data generated at S401, the apparatus linkage system 40 to apply the specific processing to the scanned data generated at S401, and store the scanned data in the object folder (S402).

Upon receipt of the request of S402, the apparatus linkage device 45a of the apparatus linkage system 40 applies the specific processing, according to the request of S402, to the scanned data included in the request of S402 (S403).

After S403, the apparatus linkage device 45a stores the scanned data, subjected to the specific processing at S403, in the object folder (S404).

After S404, the apparatus linkage device 45a notifies the image processing apparatus 30 that the scanned data has been uploaded to the object folder (S405).

Upon receipt of the notice of S405, the external linkage device 38a of the image processing apparatus 30 displays a message to the effect that the scanned data has been uploaded to the object folder, on the display device 32 of the image processing apparatus 30 (S406).

After S401, the external linkage device 38a requests, in the case where the user has not instructed to apply the specific processing to the scanned data generated at S401, the apparatus linkage system 40 to store the scanned data generated at S401 in the object folder (S407).

Upon receipt of the request of S407, the apparatus linkage device 45a of the apparatus linkage system 40 stores the scanned data in the object folder, according to the request of S407 (S408).

After S408, the apparatus linkage device 45a notifies the image processing apparatus 30 that the scanned data has been uploaded to the object folder (S409).

Upon receipt of the notice of S409, the external linkage device 38a of the image processing apparatus 30 displays the message to the effect that the scanned data has been uploaded to the object folder, on the display device 32 of the image processing apparatus 30 (S410).

Hereunder, an operation of the image processing system 10, performed to upload the scanned data generated by the image processing apparatus to the storage system, will be described.

Although the following description refers to the case where the user is utilizing the image processing apparatus 30, the same operation may be performed, when the user utilizes an image processing apparatus other than the image processing apparatus 30. **In** addition, although the following description refers to the case where the storage system in which the scanned data is stored is the storage system 50, the same operation may be performed, when the storage system in which the scanned data is stored is a storage system other than the storage system 50.

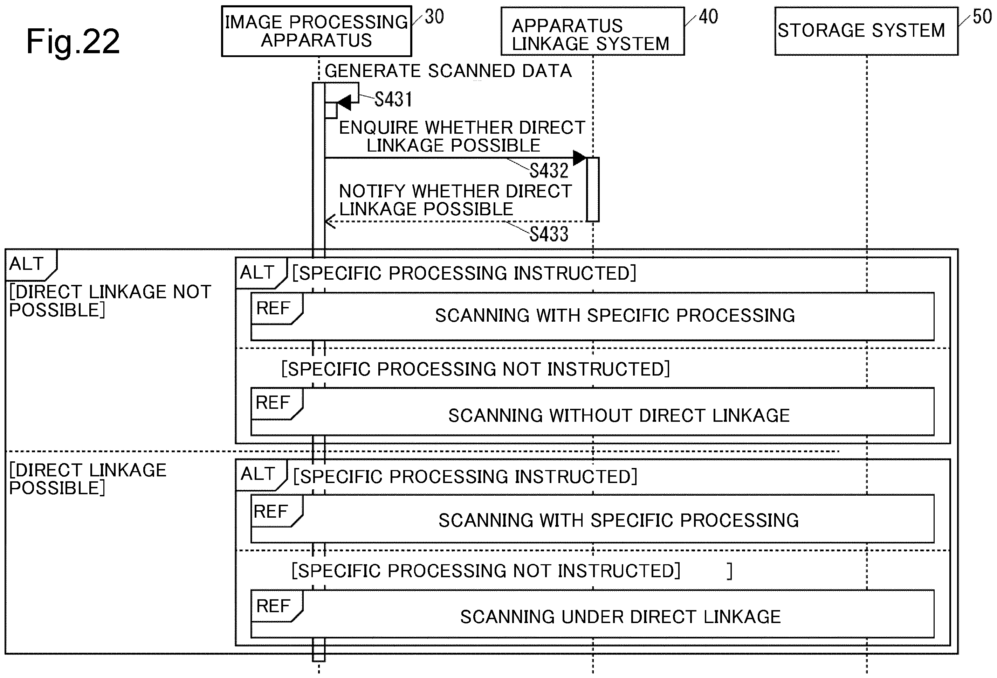

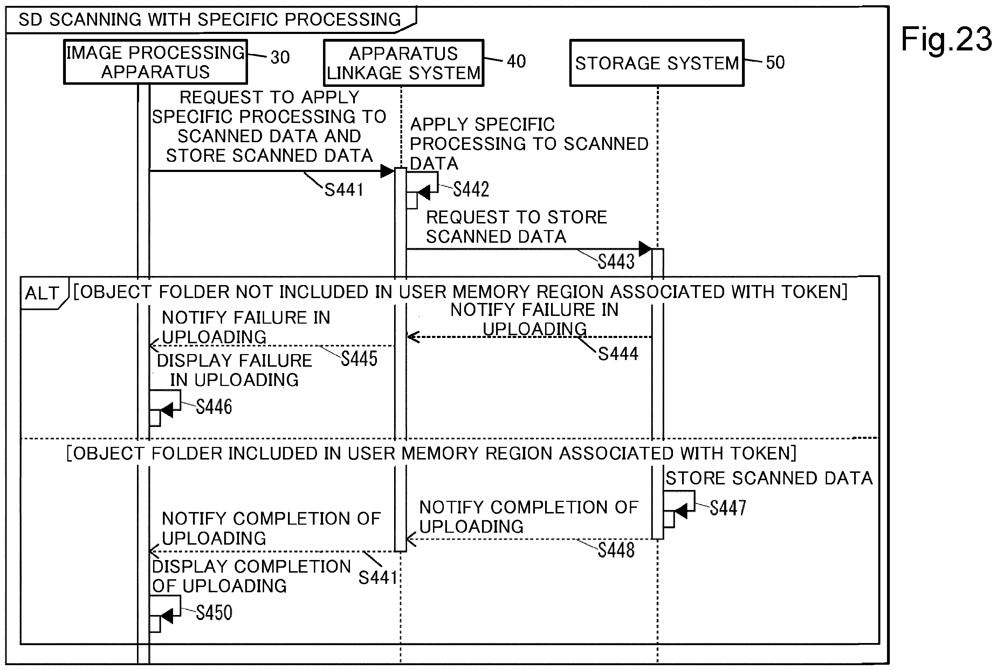

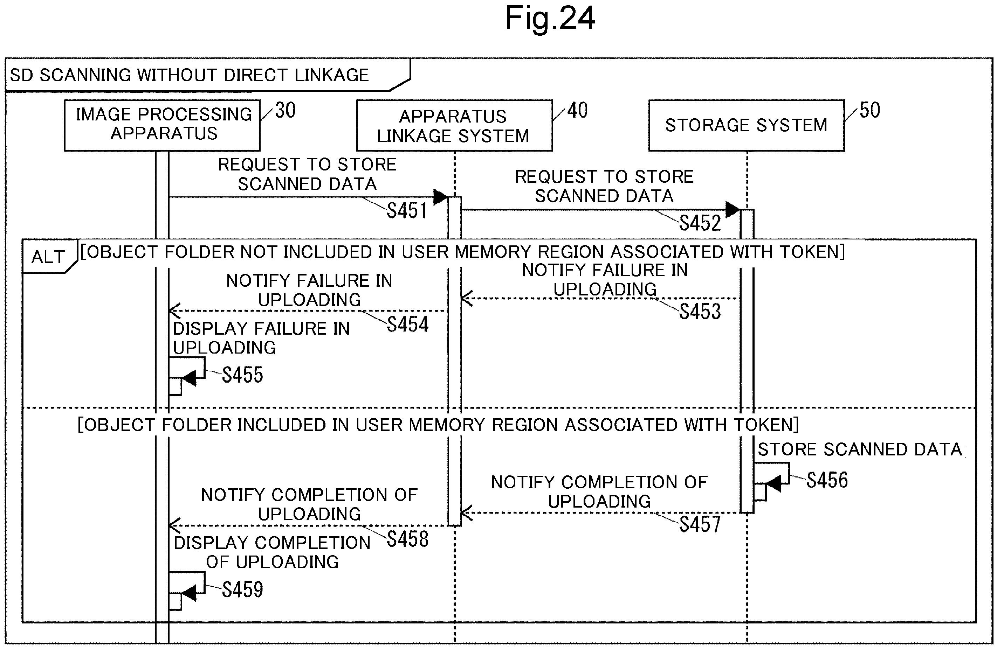

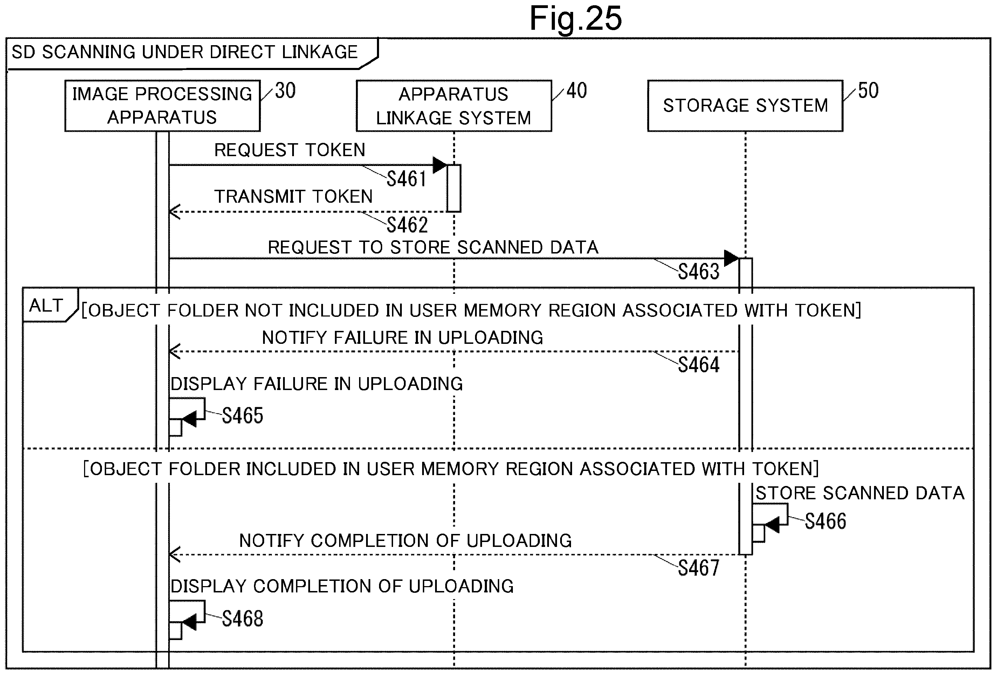

Fig. 22 is a sequence chart showing an operation of the image processing system 10, performed to upload the scanned data generated by the image processing apparatus 30 to the storage system 50. Fig. 23 is a sequence chart showing the detail of "scanning with specific processing" shown in Fig. 22. Fig. 24 is a sequence chart showing the detail of "scanning without specific processing" shown in Fig. 22. Fig. 25 is a sequence chart showing the detail of "scanning under direct linkage" shown in Fig. 22.

When the user is in the log-in state in the apparatus linkage system 40, from the image processing apparatus 30, the user can select the folder stored in the storage system 50, as described above. After selecting the folder stored in the storage system 50, the user can instruct the image processing apparatus 30 to execute a scanning operation including uploading the scanned data to the selected folder (hereinafter "object folder", with reference to the operation specified in Fig. 22 to Fig. 25), through the operation device 31 of the image processing apparatus 30. The user can also instruct the image processing apparatus 30 to perform a specific processing on the scanned data, before uploading the scanned data, through the operation device 31 of the image processing apparatus 30. The specific processing can be exemplified by applying a watermark.

When the scanning operation, including uploading the scanned data to the object folder, is instructed, the external linkage device 38a of the image processing apparatus 30 generates the scanned data, by reading the image of a document with the scanner 34, as shown in Fig. 22 (S431).

After S431, the external linkage device 38a enquires the apparatus linkage system 40 whether the storage system 50 can be directly linked with the image processing apparatus (S432).

Upon receipt of the enquiry of S432, the apparatus linkage device 45a of the apparatus linkage system 40 notifies the image processing apparatus 30 whether the storage system 50 can be directly linked with the image processing apparatus, on the basis of the storage management information 44c (S433).

Upon receipt of the notice of S433 that the storage system 50 is unable to be directly linked with the image processing apparatus, the external linkage device 38a of the image processing apparatus 30 requests, in the case where the user has instructed to apply the specific processing to the scanned data generated at S431, the apparatus linkage system 40 to apply the specific processing to the scanned data generated at S431, and store the scanned data in the object folder (S441).

Upon receipt of the request of S441, the apparatus linkage device 45a of the apparatus linkage system 40 applies the specific processing, according to the request of S441, to the scanned data included in the request of S441 (S442).

After S442, the apparatus linkage device 45a requests the storage system 50 to store the scanned data subjected to the specific processing at S442, in the object folder (S443). The apparatus linkage device 45a includes the token for the storage system 50 associated in the user management information 44b with the user ID of the user who already logged in from the image processing apparatus 30, in the request of S443.

Upon receipt of the request of S443, the storage controller 55a of the storage system 50 notifies the apparatus linkage device 45a that the uploading of the scanned data to the object folder has failed, when the object folder designated by the request of S443 is not included in the user memory region in the storage system 50, for the user who already logged in to the apparatus linkage system 40 from the image processing apparatus 30, in other words in the user memory region, associated in the storage system 50 with the user **ID** associated with the token included in the request of S443 in the user management information 54b (S444).

Upon receipt of the notice of S444, the apparatus linkage device 45a of the apparatus linkage system 40 notifies the image processing apparatus 30 that the uploading of the scanned data to the object folder has failed (S445).

Upon receipt of the notice of S445, the external linkage device 38a of the image processing apparatus 30 displays the message to the effect that the scanned data has failed to be uploaded to the object folder, on the display device 32 of the image processing apparatus 30 (S446).

Upon receipt of the request of S443, the storage controller 55a of the storage system 50 stores the scanned data included in the request of S443, in the object folder, when the object folder included in the request of S443 is included in the user memory region in the storage system 50, for the user who already logged in to the apparatus linkage system 40 from the image processing apparatus 30, in other words in the user memory region, associated in the storage system 50 with the user ID associated with the token included in the request of S443, in the user management information 54b (S447).

After S447, the storage controller 55a notifies the apparatus linkage system 40 that the scanned data has been uploaded to the object folder (S448).

After S448, the apparatus linkage device 45a of the apparatus linkage system 40 notifies the image processing apparatus 30 that the scanned data has been uploaded to the object folder (S449).

Upon receipt of the notice of S449, the external linkage device 38a of the image processing apparatus 30 displays the message to the effect that the scanned data has been uploaded to the object folder, on the display device 32 of the image processing apparatus 30 (S450).

Upon receipt of the notice of S433 that the storage system 50 is unable to be directly linked with the image processing apparatus, the external linkage device 38a of the image processing apparatus 30 requests, in the case where the user has not instructed to apply the specific processing to the scanned data generated at S431, the apparatus linkage system 40 to store the scanned data generated at S431, in the object folder (S451).

Upon receipt of the request of S451, the apparatus linkage device 45a of the apparatus linkage system 40 requests the storage system 50 to store the scanned data included in the request of S451, in the object folder (S452). The apparatus linkage device 45a includes the token for the storage system 50 associated in the user management information 44b with the user ID of the user who already logged in from the image processing apparatus 30, in the request of S452.

Upon receipt of the request of S452, the storage controller 55a of the storage system 50 notifies the apparatus linkage device 45a that the uploading of the scanned data to the object folder has failed, when the object folder designated by the request of S452 is not included in the user memory region in the storage system 50, for the user who already logged in to the apparatus linkage system 40 from the image processing apparatus 30, in other words in the user memory region, associated in the storage system 50 with the user ID associated with the token included in the request of S452, in the user management information 54b (S453).

Upon receipt of the notice of S453, the apparatus linkage device 45a of the apparatus linkage system 40 notifies the image processing apparatus 30 that the uploading of the scanned data to the object folder has failed (S454).

Upon receipt of the notice of S454, the external linkage device 38a of the image processing apparatus 30 displays the message to the effect that the scanned data has failed to be uploaded to the object folder, on the display device 32 of the image processing apparatus 30 (S455).

Upon receipt of the request of S452, the storage controller 55a of the storage system 50 stores the scanned data included in the request of S452, in the object folder, when the object folder included in the request of S452 is included in the user memory region in the storage system 50, for the user who already logged in to the apparatus linkage system 40 from the image processing apparatus 30, in other words in the user memory region, associated in the storage system 50 with the user ID associated with the token included in the request of S452, in the user management information 54b (S456).

After S456, the storage controller 55a notifies the apparatus linkage system 40 that the scanned data has been uploaded to the object folder (S457).

After S457, the apparatus linkage device 45a of the apparatus linkage system 40 notifies the image processing apparatus 30 that the scanned data has been uploaded to the object folder (S458).

Upon receipt of the notice of S458, the external linkage device 38a of the image processing apparatus 30 displays the message to the effect that the scanned data has been uploaded to the object folder, on the display device 32 of the image processing apparatus 30 (S459).

Upon receipt of the notice of S433 that the storage system 50 can be directly linked with the image processing apparatus, the external linkage device 38a of the image processing apparatus 30 executes the operations of S441 to S450, in the case where the user has instructed to apply the specific processing to the scanned data generated at S431.

Upon receipt of the notice of S433 that the storage system 50 can be directly linked with the image processing apparatus, the external linkage device 38a of the image processing apparatus 30 requests, in the case where the user has not instructed to apply the specific processing to the scanned data generated at S431, the apparatus linkage system 40 to provide the token for the storage system 50 (S461).

Upon receipt of the request of S461, the apparatus linkage device 45a of the apparatus linkage system 40 transmits the token for the storage system 50, associated with the user ID of the user who already logged in from the image processing apparatus 30, in the user management information 44b, to the image processing apparatus 30 (S462).

Upon receipt of the token transmitted at S462, the external linkage device 38a of the image processing apparatus 30 requests the storage system 50 to store the scanned data generated at S431 in the object folder (S463). The external linkage device 38a includes the token transmitted at S462, in the request of S463.

Upon receipt of the request of S463, the storage controller 55a of the storage system 50 notifies the image processing apparatus 30 that the uploading of the scanned data to the object folder has failed, when the object folder designated by the request of S463 is not included in the user memory region in the storage system 50, for the user who already logged in to the apparatus linkage system 40 from the image processing apparatus 30, in other words in the user memory region, associated in the storage system 50 with the user ID associated with the token included in the request of S463, in the user management information 54b (S464).

Upon receipt of the notice of S464, the external linkage device 38a of the image processing apparatus 30 displays the message to the effect that the scanned data has failed to be uploaded to the object folder, on the display device 32 of the image processing apparatus 30 (S465).

Upon receipt of the request of S463, the storage controller 55a of the storage system 50 stores the scanned data included in the request of S463, in the object folder, when the object folder included in the request of S463 is included in the user memory region in the storage system 50, for the user who already logged in to the apparatus linkage system 40 from the image processing apparatus 30, in other words in the user memory region, associated in the storage system 50 with the user ID associated with the token included in the request of S463, in the user management information 54b (S466).

After S466, the storage controller 55a notifies the image processing apparatus 30 that the scanned data has been uploaded to the object folder (S467).

Upon receipt of the notice of S467, the external linkage device 38a of the image processing apparatus 30 displays the message to the effect that the scanned data has been uploaded to the object folder, on the display device 32 of the image processing apparatus 30 (S468).

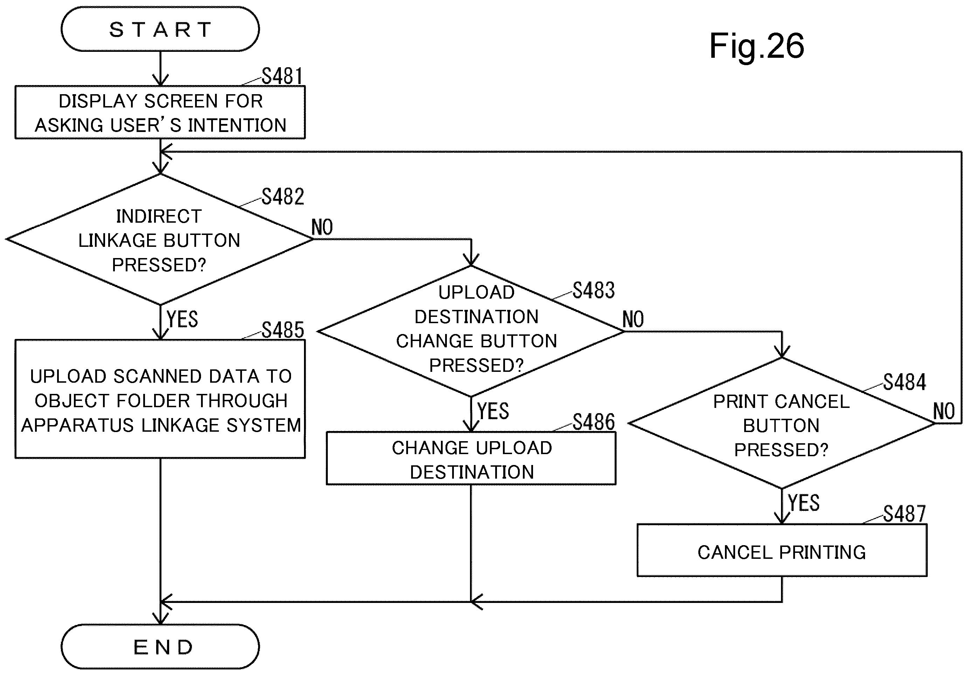

The foregoing description is based on the assumption that the image processing apparatus 30 successfully acquired the token transmitted from the apparatus linkage system 40 at S462. In the case where the acquisition of the token from the apparatus linkage system 40 has failed, the external linkage device 38a of the image processing apparatus 30 may either suspend the uploading of the scanned data to the object folder, or perform an operation specified in Fig. 26. Here, the external linkage device 38a of the image processing apparatus 30 may decide that the acquisition of the token from the apparatus linkage system 40 has failed, when, for example, the token has not been received from the apparatus linkage system 40, within a predetermined time after the request of S461.

Fig. 26 is a flowchart showing an operation of the image processing apparatus 30, performed when the acquisition of the token from the apparatus linkage system 40 has failed.

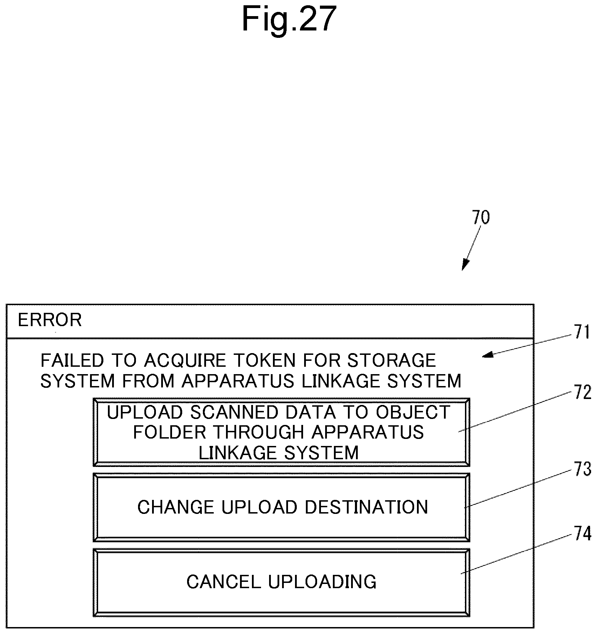

As shown in Fig. 26, the external linkage device 38a of the image processing apparatus 30 displays a screen 70 (see Fig. 27) asking the user's intention, on the display device 32 of the image processing apparatus 30 (S481).

Fig. 27 is a schematic drawing showing an example of the screen 70, displayed through the operation shown in Fig. 26.

The screen 70 shown in Fig. 27 includes a message 71 indicating the failure in acquiring the token for the storage system 50 from the apparatus linkage system 40, an indirect linkage button 72 to be pressed by the user when the user wishes to upload the scanned data to the object folder through the apparatus linkage system 40, an upload destination change button 73 to be pressed by the user when the user wishes to change the upload destination to a folder outside of the storage system 50, and an upload cancel button 74 for cancelling the uploading of the scanned data to the object folder.

Referring again to Fig. 26, after S481 the external linkage device 38a of the image processing apparatus 30 decides whether the indirect linkage button 72 has been pressed (S482).

Upon deciding at S482 that the indirect linkage button 72 has not been pressed, the external linkage device 38a decides whether the upload destination change button 73 has been pressed (S483).

Upon deciding at S483 that the upload destination change button 73 has not been pressed, the external linkage device 38a decides whether the upload cancel button 74 has been pressed (S484).

Upon deciding at S484 that the upload cancel button 74 has not been pressed, the external linkage device 38a finishes the operation of S482.

Upon deciding at S482 that the indirect linkage button 72 has been pressed, the external linkage device 38a uploads the scanned data to the object folder, through the apparatus linkage system 40 (S485). More specifically, the external linkage device 38a executes the operation of S451 (see Fig. 24). Accordingly, the image processing system 10 executes the operations of S451 to S459 (see Fig. 24).

Upon deciding at S483 that the upload destination change button 73 has been pressed, the external linkage device 38a changes the upload destination of the scanned data to the folder outside of the storage system 50 (S486). More specifically, the external linkage device 38a requests the user to select either the folder stored in the apparatus linkage system 40, or the folder stored in a storage system other than the storage system 50, as the new upload destination of the scanned data. When the folder stored in the apparatus linkage system 40 is selected as the new upload destination of the scanned data, and when application of the specific processing has been instructed, the external linkage device 38a executes the operation of S402 (see Fig. 21). Accordingly, the image processing system 10 executes the operations of S402 to S406 (see Fig. 21). When the folder stored in the apparatus linkage system 40 is selected as the new upload destination of the scanned data, and when application of the specific processing has not been instructed, the external linkage device 38a executes the operation of S407 (see Fig. 21). Accordingly, the image processing system 10 executes the operations of S407 to S410 (see Fig. 21). When the folder stored in the storage system other than the storage system 50 is selected as the new upload destination of the scanned data, the external linkage device 38a executes the operation of S432 (see Fig. 22). Accordingly, the image processing system 10 executes the operations of S432 to S468 (Fig. 22 to Fig. 25).

Upon deciding at S484 that the upload cancel button 74 has been pressed, the external linkage device 38a cancels the uploading of the scanned data to the object folder (S487).

After the operations of S485 to S487, the external linkage device 38a finishes the operation specified in Fig. 26.

Hereunder, an operation of the image processing system 10, performed to upload the facsimile reception data, generated by the image processing apparatus, to the storage system will be described.

Although the following description refers to the case where the user is utilizing the image processing apparatus 30, the same operation may be performed, when the user utilizes an image processing apparatus other than the image processing apparatus 30. In addition, although the following description refers to the case where the storage system in which the facsimile reception data is stored is the storage system 50, the same operation may be performed, when the storage system in which the facsimile reception data is stored is a storage system other than the storage system 50.

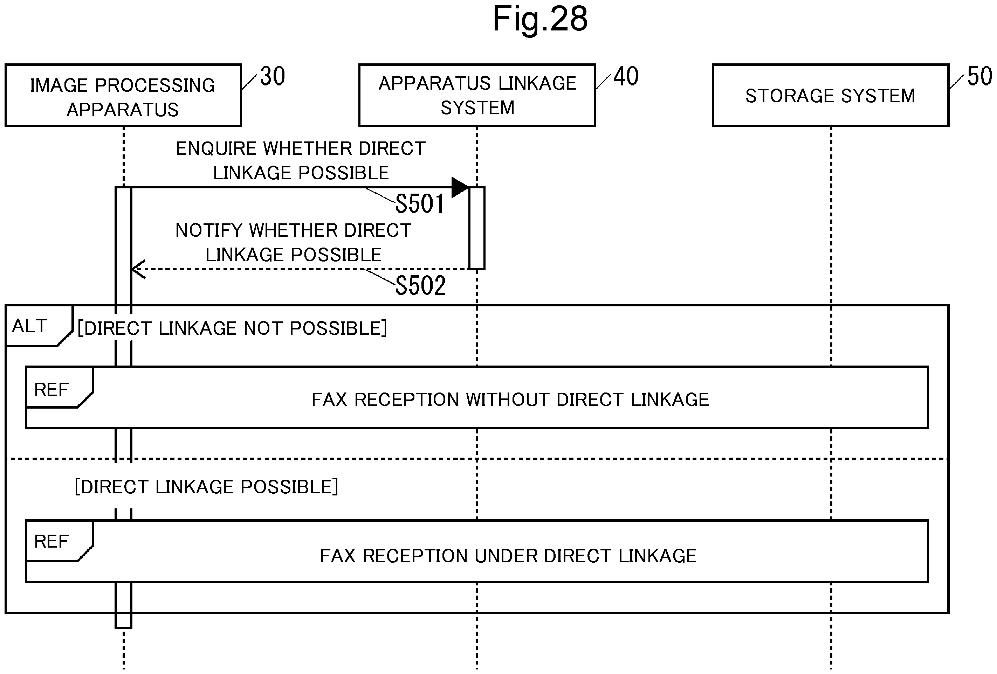

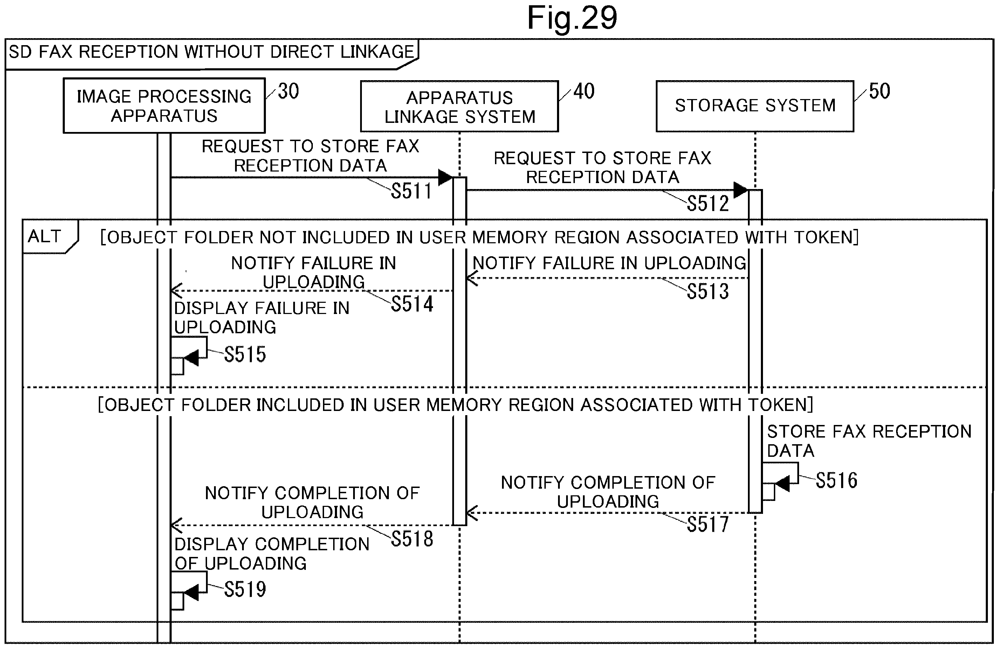

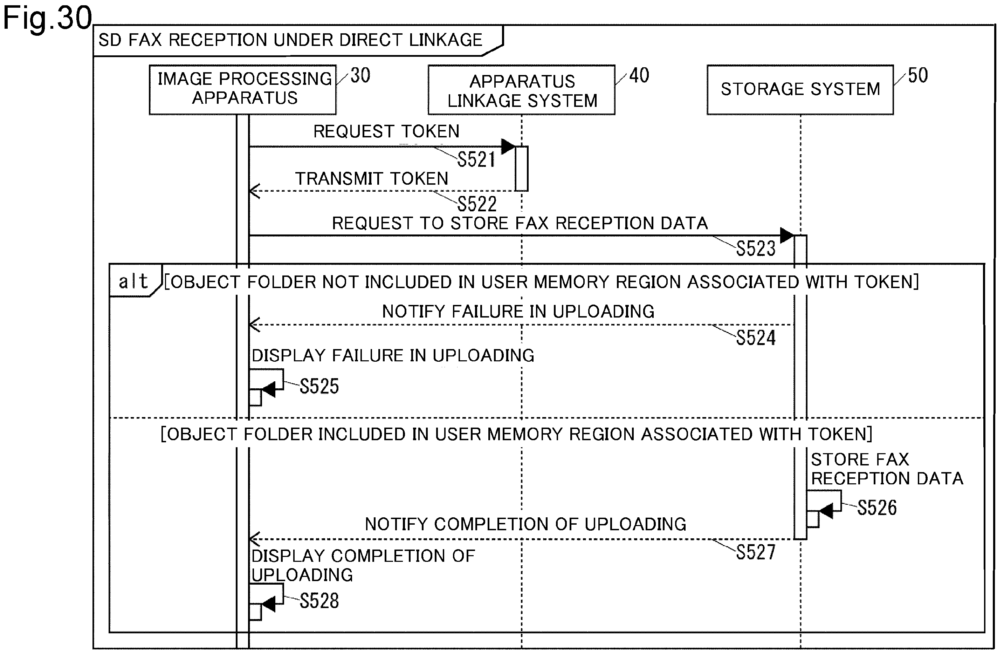

Fig. 28 is a sequence chart showing an operation of the image processing system 10, performed to upload the facsimile reception data generated by the image processing apparatus 30, to the storage system 50. Fig. 29 is a sequence chart showing the detail of "facsimile reception without direct linkage" shown in Fig. 28. Fig. 30 is a sequence chart showing the detail of "facsimile reception under direct linkage" shown in Fig. 28.

When the user is in the log-in state in the apparatus linkage system 40, from the image processing apparatus 30, the user can select the folder stored in the storage system 50, as described above. After selecting the folder stored in the storage system 50, the user can designate the selected folder (hereinafter "object folder", with reference to the operation specified in Fig. 28 to Fig. 30), as the upload destination of the facsimile reception data generated by the image processing apparatus 30. When the object folder is designated as the upload destination of the facsimile reception data generated by the image processing apparatus 30, the image processing system 10 executes the operations specified in Fig. 28 to Fig. 30.

When a facsimile from a non-illustrated external facsimile machine is received by the facsimile communication device 36, and the facsimile reception data is generated by the facsimile communication device 36, the external linkage device 38a of the image processing apparatus 30 enquires the apparatus linkage system 40 whether the storage system 50 can be directly linked with the image processing apparatus, as shown in Fig. 28 (S501).

Upon receipt of the enquiry of S501, the apparatus linkage device 45a of the apparatus linkage system 40 notifies the image processing apparatus 30 whether the storage system 50 can be directly linked with the image processing apparatus, on the basis of the storage management information 44c (S502).

Upon receipt of the notice of S502 that the storage system 50 is unable to be directly linked with the image processing apparatus, the external linkage device 38a of the image processing apparatus 30 requests the apparatus linkage system 40 to store the facsimile reception data generated by the facsimile communication device 36, in the object folder (S511).

Upon receipt of the request of S511, the apparatus linkage device 45a of the apparatus linkage system 40 requests the storage system 50 to store the facsimile reception data included in the request of S511, in the object folder (S512). The apparatus linkage device 45a includes the token for the storage system 50 associated in the user management information 44b with the user ID of the user who has designated the object folder as the upload destination of the facsimile reception data generated by the image processing apparatus 30, in the request of S512.

Upon receipt of the request of S512, the storage controller 55a of the storage system 50 notifies the apparatus linkage device 45a that the uploading of the facsimile reception data to the object folder has failed, when the object folder included in the request of S512 is not included in the user memory region in the storage system 50, for the user who has designated the object folder as the upload destination of the facsimile reception data generated by the image processing apparatus 30, in other words in the user memory region, associated in the storage system 50 with the user ID associated with the token included in the request of S512 in the user management information 54b (S513).

Upon receipt of the notice of S513, the apparatus linkage device 45a of the apparatus linkage system 40 notifies the image processing apparatus 30 that the uploading of the facsimile reception data to the object folder has failed (S514).

Upon receipt of the notice of S514, the external linkage device 38a of the image processing apparatus 30 displays the message to the effect that the facsimile reception data has failed to be uploaded to the object folder, on the display device 32 of the image processing apparatus 30 (S515).

Upon receipt of the request of S512, the storage controller 55a of the storage system 50 stores the facsimile reception data included in the request of S512, in the object folder, when the object folder included in the request of S443 is included in the user memory region in the storage system 50, for the user who has designated the object folder as the upload destination of the facsimile reception data generated by the image processing apparatus 30, in other words in the user memory region, associated in the storage system 50 with the user ID associated with the token included in the request of S512, in the user management information 54b (S516).

After S516, the storage controller 55a notifies the apparatus linkage system 40 that the facsimile reception data has been uploaded to the object folder (S517).

After S517, the apparatus linkage device 45a of the apparatus linkage system 40 notifies the image processing apparatus 30 that the facsimile reception data has been uploaded to the object folder (S518).

Upon receipt of the notice of S518, the external linkage device 38a of the image processing apparatus 30 displays the message to the effect that the facsimile reception data has been uploaded to the object folder, on the display device 32 of the image processing apparatus 30 (S519).

Upon receipt of the notice of S502 that the storage system 50 can be directly linked with the image processing apparatus, the external linkage device 38a of the image processing apparatus 30 requests the apparatus linkage system 40 to provide the token for the storage system 50 (S521).

Upon receipt of the request of S521, the apparatus linkage device 45a of the apparatus linkage system 40 transmits the token for the storage system 50, associated with the user ID of the user who has designated the object folder as the upload destination of the facsimile reception data generated by the image processing apparatus 30, in the user management information 44b, to the image processing apparatus 30 (S522).

Upon receipt of the token transmitted at S522, the external linkage device 38a of the image processing apparatus 30 requests the storage system 50 to store the facsimile reception data generated by the facsimile communication device 36, in the object folder (S523). The external linkage device 38a includes the token transmitted at S522, in the request of S523.

Upon receipt of the request of S523, the storage controller 55a of the storage system 50 notifies the image processing apparatus 30 that the uploading of the facsimile reception data to the object folder has failed, when the object folder designated by the request of S523 is not included in the user memory region in the storage system 50, for the user who has designated the object folder as the upload destination of the facsimile reception data generated by the image processing apparatus 30, in other words in the user memory region, associated in the storage system 50 with the user ID associated with the token included in the request of S523 in the user management information 54b (S524).

Upon receipt of the notice of S524, the external linkage device 38a of the image processing apparatus 30 displays the message to the effect that the facsimile reception data has failed to be uploaded to the object folder, on the display device 32 of the image processing apparatus 30 (S525).

Upon receipt of the request of S523, the storage controller 55a of the storage system 50 stores the facsimile reception data included in the request of S523, in the object folder, when the object folder included in the request of S523 is included in the user memory region in the storage system 50, for the user who has designated the object folder as the upload destination of the facsimile reception data generated by the image processing apparatus 30, in other words in the user memory region, associated in the storage system 50 with the user ID associated with the token included in the request of S523, in the user management information 54b (S526).

After S526, the storage controller 55a notifies the image processing apparatus 30 that the facsimile reception data has been uploaded to the object folder (S527).

Upon receipt of the notice of S527, the external linkage device 38a of the image processing apparatus 30 displays the message to the effect that the facsimile reception data has been uploaded to the object folder, on the display device 32 of the image processing apparatus 30 (S528).

The foregoing description is based on the assumption that the image processing apparatus 30 successfully acquired the token transmitted from the apparatus linkage system 40 at S522. In the case where the acquisition of the token from the apparatus linkage system 40 has failed, the external linkage device 38a of the image processing apparatus 30 may suspend the uploading of the facsimile reception data to the object folder. Here, the external linkage device 38a of the image processing apparatus 30 may decide that the acquisition of the token from the apparatus linkage system 40 has failed, when, for example, the token has not been received from the apparatus linkage system 40, within a predetermined time after the request of S521.

As described thus far, the image processing apparatus 30 acquires, from the apparatus linkage system 40, the token for the user acquired by the apparatus linkage system 40 at S135, from the storage system 50 outside of the apparatus linkage system 40 (S341 and S342), and downloads the print data stored in the storage system 50, using the token acquired from the apparatus linkage system 40, from the storage system 50 without the intermediation of the apparatus linkage system 40 (S343 and S346). Therefore, the risk of leakage of the print data from the apparatus linkage system 40 can be reduced.

The image processing apparatus 30 identifies the print data by searching the storage system 50 through the apparatus linkage system 40 (S201 and S205). Therefore, if the configuration of the apparatus linkage system 40 is changed when the configuration of the storage system 50 is changed, the image processing apparatus 30 can identify the print data by searching the storage system 50, despite the configuration of the image processing apparatus 30 not being changed.

When the acquisition of the token from the apparatus linkage system 40 (S341 and S342) has failed, the image processing apparatus 30 suspends the printing operation based on the print data stored in the storage system 50, without downloading the print data from the storage system 50 through the apparatus linkage system 40. In this case, the risk of leakage of the print data from the apparatus linkage system 40 can be reduced.

When the acquisition of the token from the apparatus linkage system 40 (S341 and S342) has failed, the image processing apparatus 30 enquires the user whether the user wishes to have the print data downloaded from the storage system 50 through the apparatus linkage system 40 (S361). When the user wishes to have the print data downloaded from the storage system 50 through the apparatus linkage system 40 (YES at S362), the image processing apparatus 30 downloads the print data from the storage system 50 through the apparatus linkage system 40 (S364), and therefore the convenience in use can be improved.

The image processing apparatus 30 acquires, from the apparatus linkage system 40, the token for the user acquired by the apparatus linkage system 40 at S135, from the storage system 50 outside of the apparatus linkage system 40 (S461 and S462), and uploads the scanned data to the folder in the storage system 50, using the token acquired from the apparatus linkage system 40, without the intermediation of the apparatus linkage system 40 (S463 and S466). Therefore, the risk of leakage of the scanned data from the apparatus linkage system 40 can be reduced.

The image processing apparatus 30 identifies the folder by searching the storage system 50 through the apparatus linkage system 40 (S201 and S205). Therefore, if the configuration of the apparatus linkage system 40 is changed when the configuration of the storage system 50 is changed, the image processing apparatus 30 can identify the folder by searching the storage system 50, despite the configuration of the image processing apparatus 30 not being changed.

When the acquisition of the token from the apparatus linkage system 40 (S461 and S462) has failed, the image processing apparatus 30 suspends the uploading of the scanned data to the folder in the storage system 50, without uploading the scanned data to the folder in the storage system 50 through the apparatus linkage system 40. In this case, the risk of leakage of the scanned data from the apparatus linkage system 40 can be reduced.

When the acquisition of the token from the apparatus linkage system 40 (S461 and S462) has failed, the image processing apparatus 30 enquires the user whether the user wishes to have the scanned data uploaded to the folder in the storage system 50 through the apparatus linkage system 40 (S481). When the user wishes to have the scanned data uploaded to the folder in the storage system 50 through the apparatus linkage system 40 (YES at S482), the image processing apparatus 30 uploads the scanned data to the folder in the storage system 50 through the apparatus linkage system 40 (S485), and therefore the convenience in use can be improved.

When the acquisition of the token from the apparatus linkage system 40 (S461 and S462) has failed, the image processing apparatus 30 enquires the user whether the user wishes to have the scanned data uploaded to the folder outside of the storage system 50 (S481). When the user wishes to have the scanned data uploaded to the folder outside of the storage system 50 (YES at S483), the image processing apparatus 30 uploads the scanned data to the folder outside of the storage system 50 (S486), and therefore the convenience in use can be improved.

The image processing apparatus 30 acquires, from the apparatus linkage system 40, the token for the user acquired by the apparatus linkage system 40 at S135, from the storage system 50 outside of the apparatus linkage system 40 (S521 and S522), and uploads the facsimile reception data to the folder in the storage system 50, using the token acquired from the apparatus linkage system 40, without the intermediation of the apparatus linkage system 40 (S523 and S526). Therefore, the risk of leakage of the facsimile reception data from the apparatus linkage system 40 can be reduced.

In the case of the existing image processing system, unlike the system according to the foregoing embodiment, the scanned data is stored in an external storage system, through the apparatus linkage system, and therefore the scanned data may leak from the apparatus linkage system. In contrast, the arrangement according to the foregoing embodiment reduces the risk of leakage of the information.

In the embodiment, the storage system is included in the image processing system 10. However, the storage system may be provided as a system outside of the image processing system 10.

In the embodiment, the user terminal is included in the image processing system 10. However, the user terminal may be provided as a device outside of the image processing system 10.

## Claims

1. An image processing apparatus (30) comprising a first control device (38) that acts as an external linkage device (38a),
the external linkage device (38a) being configured to:
acquire a token for a user, acquired by an apparatus linkage system (40) linked with the image processing apparatus (30) from an external storage system (50), from the apparatus linkage system (40);
download print data in the storage system (50) from the storage system (50) using the token, without intermediation of the apparatus linkage system (40); and
execute a printing operation according to the print data.

2. The image processing apparatus (30) according to claim 1,
wherein, upon receipt of a notice from the apparatus linkage system (40), that the storage system (50) is unable to be directly linked with the image processing apparatus (30), the external linkage device (38a) identifies the print data by searching the storage system (50) through the apparatus linkage system (40), and downloads the print data in the storage system (50) through the apparatus linkage system (40), instead of downloading the print data in the storage system (50) using the token, without intermediation of the apparatus linkage system (40).

3. The image processing apparatus (30) according to claim 1,
wherein, when acquisition of the token from the apparatus linkage system (40) has failed, the external linkage device (38a) enquires the user whether the user wishes to have the print data downloaded from the storage system (50) through the apparatus linkage system (40), and
when a response that the user wishes to have the print data downloaded from the storage system (50) through the apparatus linkage system (40) is received, the external linkage device (38a) downloads the print data from the storage system (50), through the apparatus linkage system (40).

4. The image processing apparatus (30) according to claim 3,
wherein the external linkage device (38a) decides that the acquisition of the token from the apparatus linkage system (40) has failed, when the token has not been acquired from the apparatus linkage system (40), within a predetermined after requesting the apparatus linkage system (40) to transmit the token.

5. The image processing apparatus (30) according to claim 1,
wherein the image processing apparatus (30) generates scanned data, and
the external linkage device (38a) acquires a token for a user, acquired by an apparatus linkage system (40) linked with the image processing apparatus (30) from an external storage system (50), from the apparatus linkage system (40), and uploads the scanned data to a folder in the storage system (50) using the token, without intermediation of the apparatus linkage system (40), instead of downloading the print data in the storage system (50) using the token without intermediation of the apparatus linkage system (40).

6. The image processing apparatus (30) according to claim 5,
wherein, upon receipt of a notice from the apparatus linkage system (40), that the storage system (50) is unable to be directly linked with the image processing apparatus (30), the external linkage device (38a) identifies the folder by searching the storage system (50) through the apparatus linkage system (40), and uploads the scanned data to the folder through the apparatus linkage system (40), instead of uploading the scanned data to the folder using the token, without intermediation of the apparatus linkage system (40).

7. The image processing apparatus (30) according to claim 5,
wherein, when acquisition of the token from the apparatus linkage system (40) has failed, the external linkage device (38a) enquires the user whether the user wishes to have the scanned data uploaded to the folder through the apparatus linkage system (40), and
when a response that the user wishes to have the scanned data uploaded to the folder through the apparatus linkage system (40) is received, the external linkage device (38a) uploads the scanned data to the folder, through the apparatus linkage system (40).

8. The image processing apparatus (30) according to claim 5,
wherein, when acquisition of the token from the apparatus linkage system (40) has failed, the external linkage device (38a) enquires the user whether the user wishes to have the scanned data uploaded to a folder outside of the storage system (50), and
when a response that the user wishes to have the scanned data uploaded to the folder outside of the storage system (50) is received, the external linkage device (38a) uploads the scanned data to the folder outside of the storage system (50).

9. The image processing apparatus (30) according to claim 1,
wherein the image processing apparatus (30) generates facsimile reception data, and
the external linkage device (38a) acquires a token for a user, acquired by an apparatus linkage system (40) linked with the image processing apparatus (30) from an external storage system (50), from the apparatus linkage system (40), and upload the facsimile reception data to a folder in the storage system (50) using the token, without intermediation of the apparatus linkage system (40), instead of downloading the print data in the storage system (50) using the token without intermediation of the apparatus linkage system (40).

10. An external linkage program (37a) that allows a processor of an image processing apparatus (30) (30) to act as an external linkage device (38a) that acquires a token for a user, acquired by an apparatus linkage system (40) linked with the image processing apparatus (30) from an external storage system (50), from the apparatus linkage system (40), downloads print data in the storage system (50) from the storage system (50) using the token, without intermediation of the apparatus linkage system (40), and executes a printing operation according to the print data.

11. The external linkage program (37a) according to claim 10,
the external linkage program (37a) allows the processor to act as the external linkage device (38a) that acquires a token for a user, acquired by an apparatus linkage system (40) linked with the image processing apparatus (30) from an external storage system (50), from the apparatus linkage system (40), and uploads the scanned data to a folder in the storage system (50) using the token, without intermediation of the apparatus linkage system (40), instead of downloading the print data in the storage system (50) using the token without intermediation of the apparatus linkage system (40).

12. The external linkage program (37a) according to claim 10,
the external linkage program (37a) allows the processor to act as the external linkage device (38a) that acquires a token for a user, acquired by an apparatus linkage system (40) linked with the image processing apparatus (30) from an external storage system (50), from the apparatus linkage system (40), and uploads the facsimile reception data to a folder in the storage system (50) using the token, without intermediation of the apparatus linkage system (40), instead of downloading the print data in the storage system (50) using the token without intermediation of the apparatus linkage system (40).

13. An image processing system comprising:
the image processing apparatus (30) according to claim 1; and
an apparatus linkage system (40) linked with the image processing apparatus (30),
wherein the apparatus linkage system (40) includes a second control device that acts as an apparatus linkage device, and
the apparatus linkage device acquires, by causing a user to log in to a storage system (50) outside of the apparatus linkage system (40), through the apparatus linkage system (40), a token for the user from the storage system (50).

14. An image processing system comprising:
the image processing apparatus (30) according to claim 5; and
an apparatus linkage system (40) linked with the image processing apparatus (30),
wherein the apparatus linkage system (40) includes a second control device that acts as an apparatus linkage device, and
the apparatus linkage device acquires, by causing a user to log in to a storage system (50) outside of the apparatus linkage system (40), through the apparatus linkage system (40), a token for the user from the storage system (50).

15. An image processing system comprising:
the image processing apparatus (30) according to claim 9; and
an apparatus linkage system (40) linked with the image processing apparatus (30),
wherein the apparatus linkage system (40) includes a second control device that acts as an apparatus linkage device, and
the apparatus linkage device acquires, by causing a user to log in to a storage system (50) outside of the apparatus linkage system (40), through the apparatus linkage system (40), a token for the user from the storage system (50).
